# EUROPÄISCHE PATENTSCHRIFT

(11) **EP 3 856 967 B1**
(45) Veröffentlichungstag und Bekanntmachung des Hinweises auf die Patenterteilung: **10.04.2024**
(21) Anmeldenummer: 19782497.2
(22) Anmeldetag: 24.09.2019
(51) Int. Cl.: D04H 3/002, D04H 3/011, D04H 3/016, D04H 3/07, D04H 3/147, E02B 3/12, E02D 17/20

(54) **SCHUTZVORRICHTUNG, BÖSCHUNGSSICHERUNG SOWIE VERWENDUNG UND VERFAHREN ZU EINER HERSTELLUNG DER SCHUTZVORRICHTUNG**
PROTECTIVE DEVICE, SLOPE SECURING MEANS AS WELL AS USE OF AND METHOD FOR PRODUCING THE PROTECTIVE DEVICE
DISPOSITIF DE PROTECTION, STABILISATEUR DE TALUS, AINSI QU'UTILISATION ET PROCÉDÉ DE FABRICATION DU DISPOSITIF DE PROTECTION

(30) Priorität: 24.09.2018 DE 102018123477
(43) Veröffentlichungstag der Anmeldung: 04.08.2021
(73) Patentinhaber: Geobrugg AG, 8590 Romanshorn (CH)
(72) Erfinder: WENDELER-GÖGGELMANN, Corinna, 9100 Herisau (CH)
(74) Vertreter: Daub, Thomas
(86) Internationale Anmeldenummer: PCT/EP2019/075703
(87) Internationale Veröffentlichungsnummer: WO 2020/064725

(56) Entgegenhaltungen:
- EP-A1- 0 670 389
- EP-A1- 1 424 418
- EP-A2- 1 160 367
- WO-A1-2014/114626
- WO-A2-2005/023955
- CA-A1- 2 994 440
- FR-A1- 3 032 727

## Beschreibung

### Stand der Technik

Die Erfindung betrifft eine Krallmatte nach dem Oberbegriff des Anspruchs 1, eine Böschungssicherung nach dem Anspruch 20 sowie eine Verwendung der Krallmatte nach Anspruch 21 und ein Verfahren zu einer Herstellung der Krallmatte nach Anspruch 22.

Aus den Dokumenten EP 1 424 418 A1, CA 2994 440 A1 und EP 1 160 367 A2 sind bereits unterschiedlich strukturierte Geotextilien, welche zumindest dazu vorgesehen sind, flächig über eine zu schützende Oberfläche, insbesondere Erdoberfläche, ausgebreitet zu werden und welche zumindest zu einem Großteil aus einer Vielzahl von miteinander kraft- und/oder stoffschlüssig verbundenen Kunststofffasern ausgebildet sind, vorgeschlagen worden.

Das Dokument FR 3 032 727 A1 beschreibt zudem eine zumindest teilweise biodegradable Geotextilie, mit einer sehr regelmäßigen gewebten Struktur.

Das Dokument WO 2014/114626 A1 beschreibt eine biologisch abbaubare vorbegrünte Geomatte mit ebener Oberfläche, welche aus einer zusammengefügten Kombination eines dreidimensionalen Wirrgeleges und einer flachen zweidimensionalen Textilie besteht. Der dreidimensionale Teil ist dabei mit Substrat und Pflanzen gefüllt und der untere, zweidimensionale Teil speichert Wasser und verhindert ein Herausfallen des Substrats bei einem aufgerollten Transport der vorbegrünten Geomatte.

Die Aufgabe der Erfindung besteht insbesondere darin, eine gattungsgemäße Krallmatte mit vorteilhaften Verwitterungseigenschaften bereitzustellen. Die Aufgabe wird erfindungsgemäß durch die Merkmale der Patentansprüche 1 sowie 20 bis 22 gelöst, während vorteilhafte Ausgestaltungen und Weiterbildungen der Erfindung den Unteransprüchen entnommen werden können.

### Vorteile der Erfindung

Die Erfindung geht aus von einer Krallmatte, insbesondere einer Erosionsschutzvorrichtung, vorzugsweise einer Geotextilie, welche zumindest dazu vorgesehen ist, flächig über eine zu schützende Erdoberfläche einer Böschung ausgebreitet zu werden und welche zumindest zu einem Großteil aus einer Vielzahl von miteinander kraft- und/oder stoffschlüssig verbundenen Kunststofffasern ausgebildet ist, die derart angeordnet sind, dass sie eine wesentliche dreidimensionale Strukturierung ausbilden.

Es wird vorgeschlagen, dass zumindest ein Großteil der Kunststofffasern zumindest zu einem Großteil biodegradabel sind. Dadurch können insbesondere vorteilhafte Verwitterungseigenschaften erreicht werden. Vorteilhaft verwittert die Schutzvorrichtung rückstandsfrei, insbesondere frei von Plastikrückständen, insbesondere Makro-, Mikro- und/oder Nanoplastikrückständen, und/oder frei von (schwer-)metallischen Rückständen. Dadurch kann vorteilhaft eine gute Umweltverträglichkeit erreicht werden, wodurch vorteilhaft eine besonders gute Eignung für einen Einsatz in ökologisch sensiblen Regionen erreicht werden kann. Zudem kann vorteilhaft eine hohe Biokompatibilität erreicht werden, insbesondere mit der die Schutzvorrichtung umgebenden Vegetation und/oder Fauna. Beispielsweise kann eine Schädigung von Lebewesen, welche Fasern der Schutzvorrichtung inkorporieren, vorteilhaft gering gehalten werden. Insbesondere ist zumindest ein Großteil der zu der Vielzahl an Kunststofffasern zugehörigen Kunststofffasern zumindest zu einem Großteil biodegradabel.

Die Schutzvorrichtung ist insbesondere zu einem Schutz eines abfallenden Geländes, insbesondere zu einer Böschungs- und/oder Hangsicherung, beispielsweise im Tiefbau, im Wasserbau und/oder im Straßenbau und/oder vorzugsweise im Rahmen von geotechnischen Sicherungsbauten, vorgesehen. Insbesondere ist die Schutzvorrichtung zu einem Einsatz im Rahmen ingenieurbiologischer Baumaßnahmen vorgesehen. Zusätzlich ist die Schutzvorrichtung dazu vorgesehen, eine Neu- und/oder Wiederbegrünung eines Geländes, insbesondere eines abfallenden Geländes, zu erleichtern und/oder zu ermöglichen. Insbesondere ist die Schutzvorrichtung, vorzugsweise zumindest der Großteil der Vielzahl an Kunststoffasern der Schutzvorrichtung, dazu vorgesehen, nach einer, insbesondere in Abhängigkeit von einer chemischen Zusammensetzung der Kunststofffasern vorgebbaren, Zeitdauer, beispielsweise nach einer, zwei, drei oder mehr Vegetationsperioden, vollständig verschwunden, insbesondere verrottet, zu sein. Beispielsweise weist eine für eine rasche Wiederbegrünung eines Geländes mit einer fertilen obersten Bodenschicht vorgesehene Schutzvorrichtung schnellverrottende Kunststofffasern auf, welche insbesondere bereits nach einer oder zwei Wachstumsperioden bereits nahezu vollständig zersetzt sind. Alternativ ist beispielsweis eine für ein Gelände mit kargen, unfruchtbaren, z.B. steinigen oder sehr steil abfallenden, Böden vorgesehene Schutzvorrichtung langsam verrottend ausgebildet und zersetzt sich erst nach mehreren, beispielsweise vier, fünf, sechs oder mehr Wachstumsperioden. Vorteilhaft ist eine Verrottungsdauer der Kunststofffasern mittels einer Einstellung der chemischen Zusammensetzung des Fasermaterials, insbesondere des Kunststoffs oder der Kunststoffmischung, einstellbar und/oder auf zu erwartende Witterungsbedingungen abstimmbar. Die Schutzvorrichtung, insbesondere die Geotextilie, ist kann als eine Böschungsmatte und/oder als eine Krallmatte ausgebildet sein. Erfindungsgemäß ist die Schutzvorrichtung als eine Krallmatte ausgebildet.

Darunter, dass die Schutzvorrichtung zu einem Großteil aus einer Vielzahl an miteinander kraft- und/oder stoffschlüssig verbundenen Kunststofffasern ausgebildet ist, soll insbesondere verstanden werden, dass ein Großteil einer Anzahl aller Einzelteile der Schutzvorrichtung, insbesondere abgesehen von Drahtfilamenten eines Drahtgitters der Schutzvorrichtung, Kunststofffasern sind. Unter einem "Großteil" soll 66 %, vorteilhaft 75 %, besonders vorteilhaft 85 %, bevorzugt 95 % und besonders bevorzugt 99 % verstanden werden. Vorzugsweise ist die Schutzvorrichtung, abgesehen von dem Drahtgitter, vollständig aus der Vielzahl von miteinander kraft- und/oder stoffschlüssig verbundenen Kunststofffasern ausgebildet. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben, Verschmelzen und/oder Vulkanisieren. Unter "kraftschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird.

Unter einer "Kunststofffaser" soll insbesondere eine aus Makromolekülen bestehende Faser verstanden werden, deren chemischer Haupt- und/oder Grundbestandteil zumindest ein synthetisch oder halbsynthetisch erzeugter Polymer mit organischen Gruppen. Erfindungsgemäß ist die Kunststofffaser eine Polymerfaser, bevorzugt eine Synthesefaser . Insbesondere bildet eine Kunststofffaser ein extrudiertes Monofilament aus. Insbesondere im Vergleich zu Geotextilien aus Naturfaser, beispielsweise Jute-, Schilf- und/oder Kokosfasern, kann eine Biodegradabilität, d.h. eine Geschwindigkeit der biologischen Zersetzbarkeit, mittels einer Wahl der chemischen Zusammensetzung der biodegradablen Kunststofffaser vorteilhaft einstellbar sein. Außerdem können bei biodegradablen Kunststofffasern über die Wahl der chemischen Zusammensetzung vorteilhaft weitere Materialeigenschaften eingestellt werden, z.B. Dehnbarkeit, Reißfestigkeit, Elastizität, Verformbarkeit oder dergleichen. Zudem sind Kunststofffasern vorteilhaft weniger anfällig gegen einen Befall mit Schimmelpilzen, welcher eine Begrünung beeinträchtigen kann. Vorteilhaft weisen die Kunststofffasern eine geringe Saugfähigkeit für Wasser auf, was ebenfalls insbesondere ein Risiko eines Befalls mit Schimmelpilzen verringert. Insbesondere weisen die Kunststofffasern zumindest im Wesentlichen identische Querschnitte und/oder Durchmesser auf. Alternativ können die Kunststofffasern variierende Querschnitte und/oder Durchmesser aufweisen. Erfindungsgemäß weist eine Kunststofffaser der Vielzahl an Kunststofffasern einen Durchmesser von zumindest 0,1 mm auf. Vorzugsweise weist eine Kunststofffaser der Vielzahl an Kunststofffasern einen runden Querschnitt und/oder einen Durchmesser von zumindest 0,2 mm, vorteilhaft zumindest 0,3 mm, besonders vorteilhaft zumindest 0,4 mm, bevorzugt zumindest 0,6 mm und besonders bevorzugt höchstens 1,5 mm auf.

Vorzugsweise beträgt der Durchmesser der biodegradablen Kunststofffaser 0,4 mm. Insbesondere ist zumindest ein Teil der Kunststofffasern als Endlosfasern ausgebildet, vorzugsweise sind alle Kunststofffasern als Endlosfasern ausgebildet. Alternativ oder zusätzlich ist insbesondere ein Teil der Kunststofffasern als Stapelfasern ausgebildet, vorzugsweise sind alle Kunststofffasern als Stapelfasern ausgebildet.

Darunter, dass die Kunststofffasern eine "wesentliche dreidimensionale Strukturierung" ausbilden, soll insbesondere verstanden werden, dass einzelne Kunststofffasern der Vielzahl an Kunststofffasern in unterschiedliche, alle drei Raumrichtungen umfassende Richtungen ausgerichtet sind / sein können und/oder dass die Kunststofffasern insbesondere zumindest teil- und/oder abschnittsweise eine Ausrichtung in eine Richtung senkrecht zu der flächigen Ausbreitungsrichtung der Schutzvorrichtung aufweisen. Insbesondere ist die Schutzvorrichtung dreidimensional strukturiert. Insbesondere ist die Schutzvorrichtung eine flächig ausbreitbare und dreidimensionale Textilie. Vorzugsweise weist die Schutzvorrichtung durch die dreidimensionale Strukturierung eine Erstreckung senkrecht zu der flächigen Ausbreitungsrichtung, insbesondere eine Dicke, auf, welche größer ist als ein 10-faches, vorzugsweise als ein 15-faches, vorteilhaft als ein 20-faches, besonders vorteilhaft als ein 30-faches, bevorzugt als ein 50-faches und besonders bevorzugt kleiner ist als ein 500-faches eines mittleren Durchmessers der Kunststofffasern. Insbesondere weist die dreidimensionale Strukturierung Hohlräume auf. Insbesondere ist die Schutzvorrichtung nicht blickdicht. Alternativ ist jedoch auch vorstellbar, dass die dreidimensionale Strukturierung frei ist von Hohlräumen und/oder blickdicht ausgebildet ist. Insbesondere weist die dreidimensionale Struktur aus Kunststofffasern eine pyramidenartige Überstruktur auf. Insbesondere bildet die pyramidenartige Überstruktur eine rasterartige Anordnung von zumindest im Wesentlichen pyramidenförmigen Erhebungen und zumindest im Wesentlichen pyramidenförmigen Vertiefungen aus. Dadurch kann bei einer Auflage der dreidimensionalen Struktur aus Kunststofffasern auf einer Oberfläche vorteilhaft eine Oberflächenreibung mit der Oberfläche erhöht werden. Vorzugsweise ist die Schutzvorrichtung wasserdurchlässig. Insbesondere sind einzelne Kunststofffasern als Vollkörper ausgebildet, welche vorzugsweise frei sind von weiteren Materialien außer dem (den) biodegradablen Kunststoff(en) und möglichen Zusatzstoffen zu einer Steuerung der Biodegradabilität. Alternativ kann zumindest ein Teil der Kunststoffasern eine Kern-Mantel-Struktur ausbilden, bei der ein aus zumindest einem abweichenden Material, beispielsweise einer Naturfaser wie einer Kokos- oder Jutefaser, ausgebildeter Kern durch einen Mantel aus biodegradablen Kunststoff umgeben ist. Mittels einer derartigen Kern-Mantel-Struktur kann vorteilhaft eine Saugfähigkeit für Flüssigkeiten der Naturfasern kontrolliert werden.

Die dreidimensionale Strukturierung ist insbesondere dazu vorgesehen, dass sich bei einer Besamung Pflanzensamen in der Strukturierung verfangen und somit auch auf einem abfallenden Gelände liegenbleiben und insbesondere nicht durch Regen oder dergleichen davongeschwemmt werden. Zudem sind Samen, die sich in der dreidimensionalen Strukturierung verfangen, vorteilhaft guten Keimbedingungen ausgesetzt, insbesondere indem sie geschützt sind von zu feuchten und/oder zu trockenen Bedingungen für eine erfolgreiche Keimung, beispielweise indem die Samen von zu feuchtem Untergrund wie Pfützen ferngehalten werden können (verhindert Faulen) und gleichzeitig durch Taubildung an den großen Oberflächen der Kunststofffasern mit ausreichend Feuchtigkeit versorgt werden können (begünstigt Keimen). Außerdem unterstützt die dreidimensionale Strukturierung vorteilhaft eine Sohlstabilisierung, insbesondere indem die dreidimensionale Strukturierung der Schutzvorrichtung eine vorteilhaft hohe Gleitreibung verleiht.

Darunter, dass zumindest ein Großteil der Kunststofffasern biodegradabel ist, soll insbesondere verstanden werden, dass ein Großteil der Kunststofffasern aus einem biodegradablen Kunststoff ausgebildet ist. Vorzugsweise sind alle Kunststofffasern biodegradabel. Darunter, dass eine Kunststofffaser zu einem Großteil biodegradabel ist, soll insbesondere verstanden werden, dass ein Großteil des Materials der Kunststofffaser biodegradabel ist. Vorzugsweise sind die Kunststofffasern vollständig biodegradabel. Insbesondere sind die biodegradablen Kunststofffasern frei von Oxo-abbaubaren Kunststoffen. Insbesondere sind die biodegradablen Kunststofffasern frei von Polyethylen, Polyvinylchlorid und/oder Polypropylen.

Unter "biodegradabel" soll insbesondere biologisch abbaubar und/oder biologisch zersetzbar verstanden werden. Insbesondere ist eine biodegradable Kunststofffaser dazu vorgesehen, sich innerhalb eines ökologisch verträglichen Zeitraums zu einem Großteil zu Kohlenstoffdioxid (CO₂) und siebbaren Rückständen geringer, vorzugsweise verschwindender, Ökotoxizität zu zersetzen. Vorzugsweise zersetzen sich die organischen Anteile der Kunststofffaser innerhalb des ökologisch verträglichen Zeitraums zumindest zu 90 % in CO₂. Insbesondere erfolgt eine Zersetzung der biodegradablen Kunststofffasern zumindest zu einem Großteil durch Mikroorganismen. Insbesondere führt eine Zersetzung der biodegradablen Kunststofffaser zu einer vorzugsweise vollständigen Umwandlung der biodegradablen Kunststofffaser zu CO₂ und/oder Biomasse. Vorzugsweise ist 90 % des nicht zu CO₂ umgewandelten Rests der Kunststofffaser nach einem Verstreichen des ökologisch verträglichen Zeitraums durch ein Sieb mit einem maximalen Sieblochdurchmesser von 2 mm siebbar. Der ökologisch verträgliche Zeitraum beträgt insbesondere zumindest 6 Monate, vorzugsweise zumindest 12 Monate, vorteilhaft zumindest 2 Jahre, bevorzugt zumindest 3 Jahre und besonders bevorzugt zumindest 5 Jahre. Außerdem beträgt der ökologisch verträgliche Zeitraum insbesondere höchstens 35 Jahre, vorzugsweise höchsten 25 Jahre, vorteilhaft höchstens 15 Jahre, bevorzugt höchstens 10 Jahre und besonders bevorzugt 5 Jahre. Insbesondere weisen die Rückstände der Kunststofffaser keine Konzentrationen der Elemente Zink, Kupfer, Nickel, Cadmium, Blei, Quecksilber, Chrom, Molybdän, Selen, Arsen und Fluor oder nur geringe Konzentrationen der genannten Elemente auf, welche die in der Norm DIN EN 13432:2000 genannten Grenzwerte nicht überschreiten. Vorzugsweise weisen Rückstände der Kunststofffaser, insbesondere im Gegensatz zu Rückständen von Polyvinylchlorid, keine Konzentrationen von Chlorwasserstoff auf. Insbesondere erzeugen die Kunststofffasern keine negativen Effekte auf einen natürlichen Kompostierungsprozess. Insbesondere erfüllen zu den Kunststofffasern identisch ausgebildete Testfasern zumindest die vorgenannten Bedingungen an Ökotoxizität, Siebbarkeit und Umwandlung in CO₂ innerhalb des ökologisch verträglichen Zeitraums, wenn die Testfasern einem Testversuch unter den in der Norm DIN EN ISO 14855:2004-10 aufgeführten Kompostierbedingungen unterzogen wird. Vorzugsweise sind die biodegradablen Kunststofffasern zumindest zu einem Großteil, vorzugsweise vollständig, aus biobasierten, insbesondere nicht-fossilen, Rohstoffen hergestellt. Insbesondere sind die biodegradablen Kunststofffasern vollständig von Organismen, insbesondere Mikroorganismen, zu Biomasse verstoffwechselbar.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Wenn zumindest ein Teil der Kunststofffasern zumindest zu einem Teil aus einem Polylactid-Kunststoff (PLA) ausgebildet sind, kann vorteilhaft eine Schutzvorrichtung mit vorteilhaften Verwitterungseigenschaften erreicht werden. Insbesondere weist der PLA-Kunststoff vorteilhaft eine zumindest im Wesentlichen neutrale CO₂-Bilanz auf, da er vorteilhaft aus nachwachsenden Rohstoffen gewonnen werden kann, wodurch insbesondere negative Auswirkungen auf das Klima und damit auf die Häufigkeit von Wetterextremen vermieden werden können. Des Weiteren weisen Fasern aus PLA-Kunststoff vorteilhaft eine besonders stabile, insbesondere gleichbleibende, Zugfestigkeit auch nach signifikanter Bewitterung auf. Fasern aus PLA-Kunststoff sind vorteilhaft hydrophob. Fasern aus PLA-Kunststoff sind vorteilhaft spinnbar und/oder extrudierbar. Fasern aus PLA-Kunststoff sind vorteilhaft schwer entflammbar. Fasern aus PLA-Kunststoff weisen mit einer Dichte von 72,06 gmol⁻¹ ein vorteilhaft niedriges Gewicht auf, wodurch sich ein Gesamtgewicht der Schutzvorrichtung vorteilhaft gering halten lässt. Vorzugsweise sind alle Kunststoffasern zumindest zu einem Teil aus einem PLA-Kunststoff ausgebildet. Es ist denkbar, dass zumindest ein Teil der Kunststofffasern oder alle Kunststofffasern vollständig aus PLA-Kunststoff ausgebildet sind.

Wenn außerdem zumindest ein Teil der Kunststofffasern zumindest zu einem Teil, insbesondere vollständig, aus einem biodegradablen Kunststoff, welcher verschieden von einem Polylactid-Kunststoff ist, ausgebildet ist, insbesondere aus einer Polyhydroxybuttersäure (PHBV), einem Polycaprolacton (PCL), einem Polybutylensuccinat (PBS) und/oder einem Polybutylenadipat-terephthalat (PBAT), kann vorteilhaft eine Schutzvorrichtung mit vorteilhaften Verwitterungseigenschaften erreicht werden, insbesondere indem zumindest eine Eigenschaft der Schutzvorrichtung, beispielsweise die Zugfestigkeit, die Dehnbarkeit und/oder die Kompostierbarkeit, und/oder ein Veränderungsgrad bzw. eine Veränderungsgeschwindigkeit der Eigenschaft im Zuge der Bewitterung, eingestellt, an zu erwartende Bedingungen angepasst und/oder optimiert werden kann. Beispielsweise kann ein Teil der Kunststofffasern aus PLA-Kunststoff und ein weiterer Teil der Kunststofffasern aus dem von dem PLA-Kunststoff verschiedenen biodegradablen Kunststoff ausgebildet sein. Die resultierende Schutzvorrichtung ist insbesondere als eine Mischung kraft- und/oder stoffschlüssig miteinander verbundener Kunststofffasern aus zumindest zwei verschiedenen biodegradablen Kunststoffen ausgebildet. Dadurch können insbesondere Eigenschaften verschiedener biodegradabler Kunststoffe vorteilhaft kombiniert werden.

Ferner wird vorgeschlagen, dass zumindest ein Teil, vorzugsweise ein Großteil, der Kunststofffasern zumindest zu einem Teil, vorzugsweise vollständig, aus einem spinnbaren Blend zumindest zweier, insbesondere genau zweier, biodegradabler Kunststoffe ausgebildet ist. Dadurch kann insbesondere eine Schutzvorrichtung mit vorteilhaften Verwitterungseigenschaften erreicht werden. Insbesondere kann dadurch zumindest eine Eigenschaft der Schutzvorrichtung, insbesondere eine Materialeigenschaft der Kunststofffasern der Schutzvorrichtung, beispielsweise die Zugfestigkeit, die Dehnbarkeit und/oder die Kompostierbarkeit, und/oder ein Veränderungsgrad bzw. eine Veränderungsgeschwindigkeit der Eigenschaft, insbesondere der Materialeigenschaft, im Zuge der Bewitterung, eingestellt, an zu erwartende Bedingungen angepasst und/oder optimiert werden. Dadurch können insbesondere Eigenschaften verschiedener biodegradabler Kunststoffe in einer Kunststofffaser vorteilhaft kombiniert werden, wodurch insbesondere eine optimierte Schutzvorrichtung mit den neuen Eigenschaften erreicht werden kann. Unter der Wendung "spinnbar" soll insbesondere extrudierbar verstanden werden. Ein spinnbarer Kunststoff und/oder ein spinnbarer Blend ist insbesondere in eine Form eines Longitudinalelements, vorzugsweise eines Monofilaments, verbringbar, welches eine Längserstreckung aufweist, die zumindest 10-mal, vorzugsweise zumindest 50-mal und bevorzugt zumindest 100-mal so groß ist wie eine maximale zu der Längserstreckung senkrecht verlaufende Quererstreckung. Unter einem "Blend" soll insbesondere ein Polymerblend, vorzugsweise ein mischbarer Polymerblend oder ein kompatibler Polymerblend, verstanden werden, welcher insbesondere eine rein physikalische Mischung zumindest zweier Kunststoffe, insbesondere biodegradabler Kunststoffe, darstellt. Insbesondere ist der Blend als ein PLA+PCL Blend, ein PLA+PBAT Blend, ein PLA+PHBV Blend oder vorzugsweise als ein PLA+PBS Blend ausgebildet.

Wenn zumindest ein Bestandteil des spinnbaren Blends als ein Polylactid-Kunststoff ausgebildet ist, wobei ein Volumenanteil des Polylactid-Kunststoffs an den aus dem spinnbaren Blend ausgebildeten Kunststofffasern zumindest 40 %, vorzugsweise zumindest 50 %, vorteilhaft zumindest 60 %, besonders vorteilhaft zumindest 70 % und bevorzugt höchstens 80 % beträgt, können vorteilhafte Materialeigenschaften erreicht werden. Besonders bevorzugt beträgt der Volumenanteil des PLA-Kunststoffs an den Kunststofffasern zwischen 50 % und 60 %. Insbesondere kann vorteilhaft eine relativ hohe Zugfestigkeit des PLA-Kunststoffs mit einer relativ hohen Dehnbarkeit eines PBAT-Kunststoffs oder eines PBS-Kunststoffs kombiniert werden. Dadurch kann vorteilhaft eine biodegradable Kunststofffaser erreicht werden, welche eine höhere Zugfestigkeit als reine PBAT-Kunststofffasern, als reine PBS-Kunststofffasern oder als reine PCL-Kunststofffasern aufweist und welche insbesondere eine höhere Dehnbarkeit als reine PLA-Kunststofffasern aufweist. Insbesondere ist der Blend als ein PLA+PCL Blend mit einem Mischungsverhältnis von 80:20, als ein PLA+PBAT Blend mit einem Mischungsverhältnis 50:50, als ein PLA+PBAT Blend mit einem Mischungsverhältnis 60:40, als ein PLA+PBS Blend mit einem Mischungsverhältnis 50:50 oder vorzugsweise als ein PLA+PBS Blend mit einem Mischungsverhältnis 60:40 ausgebildet. Alternativ sind weitere Mischungsverhältnisse und/oder weitere Kombinationen biodegradabler Kunststoffe denkbar.

Zudem wird vorgeschlagen, dass zumindest ein Großteil der Kunststofffasern, insbesondere zumindest die biodegradablen Kunststofffasern, thermoplastisch verformbar sind. Dadurch kann vorteilhaft eine einfache Modellierbarkeit der Kunststofffasern, insbesondere der Schutzvorrichtung ermöglicht werden, wodurch vorteilhaft eine besonders komplexe dreidimensionale Strukturierung der miteinander kraft- und/oder stoffschlüssig verbundenen Kunststofffasern ermöglicht werden kann. Zudem kann insbesondere auf vorteilhaft einfache Weise ein Stoffschluss zwischen einzelnen Kunststofffasern zur Herstellung der Schutzvorrichtung erreicht werden. Insbesondere sind die Kunststofffasern bei Temperaturen über 150°C, vorzugsweise über 160°C, vorteilhaft über 180°C bevorzugt über 200°C und besonders bevorzugt unterhalb 220°C thermoplastisch verformbar. Insbesondere ist eine thermoplastische Verformbarkeit eine hinreichende Bedingung für eine gute Extrudierbarkeit.

Erfindungsgemäß bilden die die Kunststofffasern ein monofiles dreidimensionales Wirrgelege mit Hohlräumen zwischen einem Großteil der Kunststofffasern, ausbilden. Dadurch kann vorteilhaft eine besonders gute Besambarkeit erreicht werden, insbesondere indem in den Hohlräumen des monofilen Wirrgeleges Pflanzensamen gute Bedingungen, insbesondere Feuchtigkeitsbedingungen, für eine Keimung vorherrschen. Vorteilhaft verfangen sich Pflanzensamen einfach in dem monofilen Wirrgelege. Das monofile Wirrgelege bildet insbesondere ein dreidimensionales Wirrvlies aus. Das monofile Wirrgelege weist eine Monofilament-Wirrgelege-Struktur auf. Die Monofilament-Wirrgelege-Struktur ermöglicht insbesondere eine einfache dreidimensionale Strukturierung. Des Weiteren kann durch die Monofilament-Wirrgelege-Struktur mit der Vielzahl an Hohlräumen vorteilhaft eine gute Wasser- und Lichtdurchlässigkeit der Schutzvorrichtung sowie insbesondere ein niedriges Gesamtgewicht der Schutzvorrichtung erreicht werden. Erfindungsgemäß werden durch die Monofilament-Wirrgelege-Struktur bereits Feinanteile eines Böschungsmaterials, beispielsweise kleine Steine und/oder kleine Erdklumpen, die Schutzvorrichtung nicht passieren und werden insbesondere zurückgehalten. Die Feinanteile verkeilen sich erfindungsgemäß in der Monofilament-Wirrgelege-Struktur. Dadurch kann ein Rückhalteeffekt vorteilhaft weiter verbessert werden. Die Monofilament-Wirrgelege-Struktur besteht insbesondere aus einer Vielzahl an Kunststofffasern, welche Monofilamente ausbilden, die sich ungeordnet, insbesondere zufällig, in alle Richtungen erstrecken. Die Kunststofffasern der Monofilament-Wirrgelege-Struktur sind mehrfach gebogen und/oder geknickt. Die Monofilament-Wirrgelege-Struktur erinnert insbesondere an getrocknete asiatische Instantnudeln. Insbesondere sind einzelne Monofilamente des monofilen Wirrgeleges an Kreuzungsstellen der Monofilament-Wirrgelege-Struktur miteinander (thermoplastisch) verbunden, insbesondere miteinander verschmolzen.

Wenn die Schutzvorrichtung ein Drahtgeflecht aufweist, kann vorteilhaft eine gute Schutzwirkung, insbesondere eine gute Erosionsschutzwirkung, erreicht werden. Vorteilhaft weist die Schutzvorrichtung mit dem Drahtgitter eine hohe Festigkeit und/oder Stabilität auf. Vorteilhaft ist das Drahtgitter dazu vorgesehen, den Boden und/oder das Gestein des zu schützenden Geländes zurückzuhalten. Dadurch kann vorteilhaft eine hohe Sicherheit erreicht werden. Insbesondere weist das Drahtgeflecht eine regelmäßige Maschenform auf. Alternativ kann die Maschenform einzelner Maschen von anderen Maschen abweichen und/oder das Drahtgeflecht eine unregelmäßige Maschenform aufweisen. Insbesondere weist das Drahtgeflecht eine, insbesondere regelmäßige, rhomboide Maschenform auf. Dadurch können vorteilhaft auch kleinere Gesteinsbrocken sicher aufgehalten werden. Alternativ kann das Drahtgeflecht auch eine andere Maschenform aufweisen, beispielsweise eine quadratische Maschenform, eine hexagonale Maschenform und/oder eine runde Maschenform. Insbesondere weist der Draht des Drahtgeflechts eine Dicke von beispielsweise etwa 1 mm, etwa 2 mm, etwa 3 mm, etwa 4 mm, etwa 5 mm, etwa 6 mm, etwa 7 mm oder noch mehr oder noch weniger oder auch einen Durchmesser eines dazwischenliegenden Werts auf. Größere, insbesondere erheblich größere, Durchmesser sind ferner denkbar, falls das Längselement mehrere Komponenten, insbesondere mehrere Drähte, umfasst, wie beispielsweise im Fall eines Drahtseils oder einer Litze oder eines Drahtbündels oder dergleichen. Insbesondere weist der Draht des Drahtgeflechts eine Korrosionsschutzschicht auf, beispielsweise eine mittels eines Feuerverzinkens aufgebrachte Zinkschicht, eine Al/Zn Korrosionsschutzschicht, eine Al/Zn/Mg Korrosionsschutzschicht oder dergleichen. Alternativ ist der Draht aus rostträgem und/oder nicht rostendem Stahl ausgebildet. Insbesondere weist die Korrosionsschutzschicht eine flächenbezogene Masse von zumindest 110 g/m², vorzugsweise zumindest 150 g/m², bevorzugt von zumindest 200 g/m² und besonders bevorzugt von zumindest 250 g/m² auf. Insbesondere ist das Drahtgeflecht flächig ausgebildet. Insbesondere weist das Drahtgeflecht eine Haupterstreckungsebene auf, welche zumindest im Wesentlichen parallel zu einer Haupterstreckungsebene des Wirrgeleges verläuft. Vorzugsweise erstreckt sich das Drahtgeflecht zumindest über einen Großteil einer flächigen Gesamterstreckung der Schutzvorrichtung. Bevorzugt erstreckt sich das Drahtgeflecht vollständig über die flächige Gesamterstreckung der Schutzvorrichtung. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Ferner wird vorgeschlagen, dass das Drahtgeflecht zumindest aus miteinander verflochtenen wendelförmigen Längselementen ausgebildet ist. Dadurch kann insbesondere ein vorteilhaft strukturiertes Drahtgeflecht erzeugt werden. Vorteilhaft weist ein derartiges Drahtgeflecht eine hohe Zugfestigkeit auf. Vorteilhaft ist ein derartiges Drahtgeflecht mit der Schutzvorrichtung, insbesondere dem Wirrgelege, aufrollbar ausgebildet. Dadurch kann vorteilhaft eine Montage und/oder ein Transport erleichtert werden. Insbesondere weist ein Längselement eine Längserstreckung auf, welche zumindest 10-mal, vorzugsweise zumindest 50-mal und bevorzugt zumindest 100-mal so groß ist wie eine maximale zu der Längserstreckung senkrecht verlaufende Quererstreckung. Insbesondere ist wenigstens eines der wendelförmigen Längselemente, vorzugsweise alle wendelförmigen Längselemente, zumindest aus einem Einzeldraht, einem Drahtbündel, einer Drahtlitze, einem Drahtseil und/oder einem anderen Längselement mit zumindest einem Draht gefertigt. Unter einem "Draht" soll in diesem Zusammenhang insbesondere ein länglicher und/oder dünner und/oder zumindest maschinell biegbarer und/oder biegsamer Körper verstanden werden. Vorteilhaft weist der Draht entlang seiner Längsrichtung einen zumindest im Wesentlichen konstanten, insbesondere kreisförmigen oder elliptischen Querschnitt auf. Besonders vorteilhaft ist der Draht als ein Runddraht ausgebildet. Es ist aber auch denkbar, dass der Draht zumindest abschnittsweise oder vollständig als ein Flachdraht, ein Vierkantdraht, ein polygonaler Draht und/oder ein Profildraht ausgebildet ist.

Insbesondere weisen die Längselemente eine Form einer flachen, insbesondere flachgedrückten, Spirale auf. Die wendelförmigen Längselemente weisen insbesondere zumindest einen ersten Schenkel, zumindest einen zweiten Schenkel sowie zumindest eine den ersten Schenkel und den zweiten Schenkel miteinander verbindende Biegestelle auf. Vorteilhaft sind benachbarte, miteinander verflochtene wendelförmige Längselemente über ihre Biegestellen verbunden. Besonders vorteilhaft sind jeweils zwei Biegestellen unterschiedlicher wendelförmiger Längselemente miteinander verbunden, insbesondere ineinander eingehakt. Insbesondere weisen die wendelförmigen Längselemente des Drahtgeflechts denselben Drehsinn auf. Vorteilhaft sind jeweils zwei wendelförmige Längselemente miteinander verknotet, insbesondere jeweils an einem ersten ihrer Enden und/oder jeweils an einem den ersten Enden gegenüberliegenden zweiten ihrer Enden.

Insbesondere sind die miteinander verflochtenen wendelförmigen Längselemente ineinander gedreht. Vorzugsweise ist die Längsrichtung der wendelförmigen Längselemente zumindest im Wesentlichen parallel oder parallel zu einer Haupterstreckungsrichtung der wendelförmigen Längselemente angeordnet. Vorzugsweise ist die Haupterstreckungsebene der Wendel zumindest im Wesentlichen parallel zu einer Haupterstreckungsebene des Drahtgeflechts angeordnet, zumindest in einem planar ausgelegten und/oder planar ausgerollten Zustand des Drahtgeflechts, welcher sich insbesondere von einem installierten Zustand des Drahtgeflechts unterscheiden kann. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt.

Des Weiteren wird vorgeschlagen, dass das Drahtgeflecht, insbesondere zumindest zweiseitig, von den Kunststofffasern umflochten ist. Dadurch kann insbesondere eine vorteilhafte Kombination aus Kunststofffaserstruktur, insbesondere aus dem Wirrgelege, vorzugsweise der Krallmatte, ermöglicht werden. Vorteilhaft kann das Drahtgeflecht und die Kunststofffaserstruktur, insbesondere das Wirrgelege und/oder die Krallmatte, in einem einzelnen Arbeitsschritt verlegt werden. Dadurch kann vorteilhaft eine Montage vereinfacht werden. Zudem kann vorteilhaft eine bleibende Sicherung eines abfallenden Geländes, insbesondere einer Böschung, auch nach einer biologischen Zersetzung der Kunststofffasern erreicht werden. Insbesondere können dadurch die Vorteile einer einfachen

Besamung und einer hohen Sicherheit kombiniert werden. Insbesondere sind das Drahtgeflecht und die Kunststofffaserstruktur, insbesondere das Wirrgelege und/oder die Krallmatte, zerstörungsfrei untrennbar miteinander verbunden. Unter der Wendung "zerstörungsfrei untrennbar" soll insbesondere nicht ohne eine Beschädigung voneinander trennbar verstanden werden. Unter der Wendung "von den Kunststofffasern umflochten" soll insbesondere verstanden werden, dass das Drahtgeflecht in die zufällige Struktur aus miteinander stoffschlüssig verbundenen Kunststofffasern eingearbeitet ist und/oder von den miteinander stoffschlüssig verbundenen Kunststofffasern auf zumindest zwei, vorzugsweise allen, Seiten umgeben ist. Insbesondere bildet das Drahtgeflecht eine Art Trägergeflecht für ein zufällig angeordnetes, aus den Kunststofffasern ausgebildetes dreidimensionales Geflecht aus, welches das Drahtgeflecht umgibt.

Außerdem wird vorgeschlagen, dass zumindest ein Teil der Kunststofffasern stoffschlüssig mit dem Drahtgeflecht verbunden ist. Dadurch kann vorteilhaft eine besonders stabile Kombination aus Drahtgeflecht und Kunststofffasern erreicht werden.

Zudem wird vorgeschlagen, dass das Drahtgeflecht eine dreidimensionale, matratzenartige Struktur aufweist. Dadurch kann vorteilhaft eine hohe Flexibilität der Schutzvorrichtung, insbesondere des Drahtgeflechts, gegenüber einer Belastung in einer zu der Haupterstreckungsebene des Drahtgeflechts senkrechten Belastungsrichtung erreicht werden. Beispielsweise ist die Schutzvorrichtung, insbesondere bei einer Montage, dadurch vorteilhaft begehbar und/oder eingeschränkt befahrbar. Zudem kann durch die dreidimensionale, matratzenartige Struktur vorteilhaft eine Reibung, insbesondere eine Verzahnung mit einer Oberflächenstruktur des Geländes erhöht werden. Dadurch kann vorteilhaft eine Stabilisierung des Geländes verbessert und insbesondere eine Erosion weiter verringert werden. Außerdem kann durch die dreidimensionale, matratzenartige Struktur des Drahtgeflechts eine Aufspannhöhe der dreidimensionalen Struktur aus Kunststofffasern, insbesondere des dreidimensionalen Wirrgeleges, vorteilhaft gestützt werden, so dass insbesondere eine Abflachung der dreidimensionalen Struktur, insbesondere des Wirrgeleges, einer installierten Schutzvorrichtung im Laufe der Zeit möglichst gering gehalten werden kann. Unter einer "matratzenartigen Struktur" soll insbesondere eine dreidimensionale flächige Struktur verstanden werden, welche eine Federungskapazität in eine Richtung senkrecht zu der flächigen Erstreckung der Struktur aufweist.

Wenn das Drahtgeflecht zumindest einen Draht umfasst, welcher zumindest teilweise aus einem hochfesten Stahl, insbesondere mit einer Zugfestigkeit von zumindest 500 N/mm², vorzugsweise zumindest 750 N/mm², vorteilhaft zumindest 1000 N/mm², besonders vorteilhaft zumindest 1770 N/mm², bevorzugt zumindest 2500 N/mm² und besonders bevorzugt höchstens 3000 N/mm², ausgebildet ist, kann vorteilhaft eine besonders hohe Stabilität der Schutzvorrichtung erreicht werden. Insbesondere kann dadurch eine hohe Sicherheit erreicht werden.

Zusätzlich wird vorgeschlagen, dass bei zumindest einem Testzugversuch zumindest ein Testfaserstück zumindest einer, insbesondere zumindest im Wesentlichen unbewitterten und/oder zumindest im Wesentlichen neuwertigen, Kunststofffaser der Schutzvorrichtung, insbesondere zumindest ein Testfaserbündelstück eines Faserbündels der Schutzvorrichtung, eine Festigkeit höher als 70 MPa, vorzugsweise höher als 80 MPa, bevorzugt höher als 90 MPa und besonders bevorzugt höher als 100 MPa aufweist. Dadurch kann vorteilhaft eine hohe, insbesondere initiale, Robustheit der Schutzvorrichtung erreicht werden. Dadurch kann vorteilhaft eine einfache Montage und Besamung ermöglicht werden, insbesondere indem die Schutzvorrichtung, insbesondere bei einer Montage und/oder bei einer Besamung, begehbar und/oder eingeschränkt befahrbar ist. Außerdem kann dadurch ein besonders gutes Rückhaltevermögen erreicht werden, welches insbesondere besser ist, als das Rückhaltevermögen gewöhnlicher Erosionsschutzmatten, beispielsweise aus Jute oder Kokos. Insbesondere ist das Testfaserstück, vorzugsweise das Testfaserbündelstück, zumindest im Wesentlichen identisch zu einer Kunststofffaser der Schutzvorrichtung, insbesondere einem Bündel an Kunststofffasern der Schutzvorrichtung. Vorzugsweise soll unter "im Wesentlichen identisch" abgesehen von Fertigungstoleranzen und/oder im Rahmen fertigungstechnischer Möglichkeiten identisch verstanden werden. Insbesondere ist das Testfaserstück einteilig. Vorzugsweise umfasst das Testfaserbündelstück zumindest 10, vorzugsweise zumindest 20 Kunststofffasern, wobei in dem Fall, dass die Schutzvorrichtung verschiedenartige Kunststofffasern umfasst, die Zusammensetzung des Testfaserbündelstücks einer mittleren Zusammensetzung der Kunststofffasern der Schutzvorrichtung entspricht. Insbesondere ist das Testfaserstück gerade. Insbesondere ist das Testfaserstück und/oder das Testfaserbündelstück zumindest 1 cm, vorzugsweise zumindest 2 cm, bevorzugt zumindest 10 cm und höchstens 20 cm lang. Insbesondere ist das Testfaserstück oder das Testfaserbündelstück bei dem Testzugversuch jeweils an seinen Enden mittels Klemmbacken in einer Zugtestvorrichtung eingespannt, wobei die Klemmbacken bei dem Testzugversuch auseinanderbewegt werden. Insbesondere werden die Klemmbacken bei dem Testzugversuch mit einer Geschwindigkeit von 20 mm/min auseinanderbewegt und die jeweiligen an den Klemmbacken entstehenden Zugkräfte gemessen bis das Testfaserstück und/oder das Testfaserbündelstück auseinanderreißt. Die resultierende Festigkeit ist insbesondere die relativ auf eine Querschnittsfläche des Testfaserstücks und/oder des Testfaserbündelstücks wirkende maximale Kraft, welche das Testfaserstück und/oder das Testfaserbündelstück ohne zu reißen aushält. Vorzugsweise ist unter der Festigkeit eine mittlere Festigkeit zu verstehen, wobei insbesondere zu einer Bestimmung der mittleren Festigkeit zumindest eine Statistik von zehn Einzelmessungen erforderlich ist. Unter "im Wesentlichen neuwertig" soll insbesondere frei von Vorschädigungen durch UV-Licht, Feuchtigkeit und Zugbelastung verstanden werden. Unter einer "Festigkeit" eines Testfaserstücks oder eines Testfaserbündelstücks soll insbesondere eine Zugfestigkeit des Testfaserstücks oder des Testfaserbündelstücks verstanden werden.

Außerdem wird vorgeschlagen, dass das Testfaserstück, insbesondere das Testfaserbündelstück, nach einem Durchlaufen eines zumindest 500-stündigen, insbesondere normierten, Bestrahlungs- und Bewitterungstests in einer Bewitterungskammer, bei welchem das Testfaserstück, insbesondere das Testfaserbündelstück, zumindest zyklisch zumindest einer Bestrahlung mit UV-Licht und zumindest einer Bewitterung durch Sprühwasser ausgesetzt ist, bei dem Testzugversuch eine Restfestigkeit von zumindest 66 %, vorzugsweise zumindest 75 %, vorteilhaft zumindest 85 %, bevorzugt zumindest 90 % und besonders bevorzugt von höchstens 95 % einer initialen Festigkeit des Testfaserstücks, insbesondere des Testfaserbündelstücks, in einem unbewitterten, insbesondere zumindest im Wesentlichen neuwertigen, Zustand aufweist. Dadurch kann vorteilhaft eine hohe Sicherheit der Schutzvorrichtung, insbesondere während einer ersten Vegetationsperiode im Anschluss an eine Installation der Schutzvorrichtung, erreicht werden. Außerdem kann dadurch vorteilhaft eine ungeschützte Lagerung für eine begrenzte Zeit an einem Installationsort vor und/oder während einer Montage erlaubt werden. Unter einer "initialen Festigkeit" soll insbesondere eine Festigkeit nach einer Herstellung einer Kunststofffaser und/oder eine Festigkeit vor einer Bewitterung der Kunststofffaser verstanden werden.

Insbesondere umfasst der Bestrahlungs- und Bewitterungstest zumindest eine Folge von Bestrahlungs- und Bewitterungszyklen, während der das Testfaserstück, insbesondere das Testfaserbündelstück, vorgegebenen Umgebungsbedingungen ausgesetzt wird. Ein Bestrahlungs- und Bewitterungszyklus dauert insbesondere 120 min. Während der Durchführung des Bestrahlungs- und Bewitterungstests wiederholen sich insbesondere die Bestrahlungs- und Bewitterungszyklen pausenlos. Der 500-stündige Bestrahlungs- und Bewitterungstest umfasst insbesondere eine Folge von 250 zumindest im Wesentlichen identischen Bestrahlungs- und Bewitterungszyklen. Ein Bestrahlungs- und Bewitterungszyklus umfasst insbesondere eine, vorzugsweise dauerhafte, Bestrahlung mit UV-Licht in einem Wellenlängenbereich zwischen 300 nm und 400 nm mit einer Bestrahlungsstärke von 60 W/m² ± 2 W/m², vorzugsweise mittels einer Xenon-Lampe mit entsprechenden Filtern zu einer Simulation von Tageslicht UV-Strahlung. Zudem umfasst jeder Bestrahlungs- und Bewitterungszyklus eine 18-minütige Sprühphase, während welcher das Testfaserstück, insbesondere das Testfaserbündelstück, einem Besprühen mit Sprühwasser ausgesetzt ist, sowie eine 102-minütige Trockenphase während welcher das Testfaserstück, insbesondere das Testfaserbündelstück, frei ist von einer Besprühung mit Sprühwasser. Insbesondere beträgt eine Bewitterungskammertemperatur während der Durchführung des Bestrahlungs- und Bewitterungstests in der Bewitterungskammer, vorzugsweise konstante, 38°C ± 3°C. Insbesondere beträgt eine relative Luftfeuchtigkeit innerhalb der Bewitterungskammer während der Durchführung des Bestrahlungs- und Bewitterungstests, vorzugsweise konstante, 50 % ± 10°%. Insbesondere beträgt eine Schwarzstandardtemperatur des Testfaserstücks, insbesondere des Testfaserbündelstücks, innerhalb der Bewitterungskammer während der Durchführung des Bestrahlungs- und Bewitterungstests, vorzugsweise konstante, 65°C ± 3°C. Bevorzugt folgt der Ablauf des Bestrahlungs- und Bewitterungstests den Vorgaben nach dem Zyklus 1 des Verfahrens A aus der Norm DIN EN ISO 4892-2:2013-06.

Des Weiteren wird vorgeschlagen, dass bei zumindest einem Testdehnversuch zumindest ein Testfaserstück zumindest einer, insbesondere zumindest im Wesentlichen unbewitterten und/oder zumindest im Wesentlichen neuwertigen, Kunststofffaser der Schutzvorrichtung, insbesondere zumindest ein Testfaserbündelstück eines Faserbündels der Schutzvorrichtung, eine Dehnbarkeit höher als 500 %, vorzugsweise höher als 600 % aufweist. Dadurch kann vorteilhaft eine hohe, insbesondere initiale, Flexibilität, insbesondere Elastizität, der Schutzvorrichtung erreicht werden. Dadurch kann vorteilhaft eine einfache Montage und Besamung ermöglicht werden, insbesondere indem die Schutzvorrichtung, insbesondere bei einer Montage und/oder bei einer Besamung, begehbar und/oder eingeschränkt befahrbar ist. Zudem kann vorteilhaft eine gute Formanpassbarkeit der Schutzvorrichtung an Bodenunebenheiten erreicht werden. Insbesondere ist das Testfaserstück oder das Testfaserbündelstück bei dem Testdehnversuch jeweils an seinen Enden mittels Klemmbacken in einer Dehntestvorrichtung eingespannt, wobei die Klemmbacken bei dem Testdehnversuch auseinanderbewegt werden. Vorzugsweise ist die Dehntestvorrichtung identisch zu der Zugtestvorrichtung ausgebildet. Bevorzugt ist die Zugtestvorrichtung neben der Durchführung des Testzugversuchs auch zu einer Durchführung des Testdehnversuchs vorgesehen und umgekehrt. Insbesondere werden die Klemmbacken bei dem Testdehnversuch mit einer Geschwindigkeit von 20 mm/min auseinanderbewegt und die jeweiligen Längenänderungen des Testfaserstücks oder des Testfaserbündelstücks gemessen bis das Testfaserstück und/oder das Testfaserbündelstück auseinanderreißt. Die resultierende Dehnbarkeit ist insbesondere die maximale Längenänderung, welche das Testfaserstück und/oder das Testfaserbündelstück ohne zu reißen aushält. Vorzugsweise ist unter der Dehnbarkeit eine mittlere Dehnbarkeit zu verstehen, wobei insbesondere zu einer Bestimmung der mittleren Dehnbarkeit zumindest eine Statistik von zehn Einzelmessungen erforderlich ist.

Wenn das Testfaserstück, insbesondere das Testfaserbündelstück, nach einem Durchlaufen eines zumindest 500-stündigen, insbesondere normierten, Bestrahlungs- und Bewitterungstests in einer Bewitterungskammer, bei welchem das Testfaserstück, insbesondere das Testfaserbündelstück, zumindest zyklisch zumindest einer Bestrahlung mit UV-Licht und zumindest einer Bewitterung durch Wasser ausgesetzt ist, bei dem Testdehnversuch eine Restdehnbarkeit von zumindest 50 %, vorzugsweise zumindest 66 %, vorteilhaft zumindest 75 %, besonders vorteilhaft zumindest 85 %, bevorzugt zumindest 90 % und besonders bevorzugt von höchstens 95 % einer initialen Dehnbarkeit des Testfaserstücks insbesondere des Testfaserbündelstücks, in einem unbewitterten, insbesondere zumindest im Wesentlichen neuwertigen, Zustand aufweist, kann vorteilhaft eine Überarbeitbarkeit einer installierten Schutzvorrichtung, beispielsweise zu einem Nachbesamen, bei welchem ein erneutes Begehen der Schutzvorrichtung notwendig ist, ermöglicht werden. Außerdem kann dadurch vorteilhaft eine ungeschützte Lagerung für eine begrenzte Zeit an einem Installationsort vor und/oder während einer Montage erlaubt werden. Unter einer "initialen Dehnbarkeit" soll insbesondere eine Dehnbarkeit nach einer Herstellung einer Kunststofffaser und/oder eine Dehnbarkeit vor einer Bewitterung der Kunststofffaser verstanden werden.

Ferner wird vorgeschlagen, dass bei zumindest einem Kompostierversuch an zumindest einem Testfaserstück zumindest einer zumindest teilweise biodegradablen Kunststofffaser der Schutzvorrichtung, insbesondere an zumindest einem Testfaserbündelstück eines zumindest teilweise biodegradablen Faserbündels der Schutzvorrichtung, zumindest 10 %, vorzugsweise zumindest 30 %, vorteilhaft zumindest 50 %, bevorzugt zumindest 70 % und besonders bevorzugt zumindest 90 % des Testfaserstücks, insbesondere des Testfaserbündelstücks, nach einem Zeitraum von 2 Jahren, insbesondere von 4 Jahren, vorzugsweise von 6 Jahren und bevorzugt von 8 Jahren, biologisch abgebaut und insbesondere desintegriert ist. Dadurch können insbesondere vorteilhafte Verwitterungseigenschaften erreicht werden. Dadurch kann vorteilhaft eine gute Umweltverträglichkeit erreicht werden, wodurch vorteilhaft eine besonders gute Eignung für einen Einsatz in ökologisch sensiblen Regionen erreicht werden kann. Insbesondere ist eine Biodegradibilität an zu erwartende Umweltbedingungen an einem Installationsort und/oder an vorgesehene Verwendungen der Schutzvorrichtung anpassbar. Insbesondere ist die Biodegradibilität mittels einer Zugabe von kleinen Mengen an Zusatzstoffen, welche die Biodegradibilität erhöhen oder die Biodegradibilität verringern, einstellbar. Beispielsweise sind Kunststofffasern für eine Schutzvorrichtung, welche zu einer Neu- und/oder Wiederbegrünung einer Oberfläche vorgesehen sind, vorteilhaft schnell biologisch abbaubar und werden spätestens nach 2 Jahren zumindest zu einem Großteil zersetzt, wobei vorzugsweise ein Großteil einer Zersetzung in das zweite Lebensjahr der Schutzvorrichtung fällt. Alternativ sind beispielsweise Kunststofffasern für eine Schutzvorrichtung, welche hauptsächlich zu einem Erosionsschutz ohne eine Wiederbegrünung vorgesehen sind, länger haltbar und eine biologische Zersetzung setzt später ein, so dass nach 5 Jahren, insbesondere 8 Jahren, vorzugsweise 10 Jahren, die biodegradablen Kunststofffasern noch zumindest zu einem Großteil vorhanden sind. Insbesondere erfolgt der Kompostierversuch in einer Testkompostieranlage unter kontrollierten Kompostierbedingungen. Vorzugsweise erfolgt der Kompostierversuch unter den in der Norm DIN EN ISO 14855:2004-10 genannten Kompostierungsbedingungen. Die kontrollierten Kompostierbedingungen umfassen insbesondere eine Vermischung der biodegradablen Kunststofffasern mit einem Inokulum, welcher vorzugsweise als ein gut belüfteter Kompost aus einer aeroben Kompostieranlage ausgebildet ist und zumindest im Wesentlichen frei ist von größeren inerten Objekten. Die biodegradablen Kunststofffasern werden hierbei insbesondere derart zerkleinert, dass eine gesamte Oberfläche einzelner Stückchen Kunststofffasern kleiner ist als 2 cm x 2 cm. Ein Anteil gesamter Trockensubstanz an dem gesamten Inokulums des Kompostierversuchs ist insbesondere zwischen 5:10 und 5,5:10. Ein Anteil organischer Trockensubstanz an dem gesamten Inokulums des Kompostierversuchs ist insbesondere weniger als 1,5:10. Ein Anteil organischer Trockensubstanz an der gesamten Trockensubstanz des Kompostierversuchs ist insbesondere weniger als 3:10. Ein pH-Wert einer Mischung aus einem Teil Inokulum und fünf Teilen deionisiertem Wasser beträgt insbesondere zwischen 7,0 und 9,0. Eine Aktivität des Inokulums des Kompostierversuchs ist insbesondere derart ausgebildet, dass ein biologisch abbaubares Referenzmaterial, beispielsweise eine TLC-Cellulose-Referenz-Folie mit einer Partikelgröße kleiner als 20 µm, innerhalb von 10 Tagen zwischen 50 mg und 150 mg CO₂ pro Gramm organischer Trockensubstanz ausgast. Insbesondere wird die Mischung aus Inokulum und biodegradablen Kunststofffasern in einem Gefäß der Testkompostieranlage mit einem Innenvolumen von zumindest 3 I dem Kompostierversuch unterzogen, wobei das Gefäß zumindest zu zwei Dritteln mit der Mischung aus Inokulum und biodegradablen Kunststofffasern gefüllt ist. Das gefüllte Gefäß der Testkompostieranlage wird insbesondere einer konstanten Temperatur von 58°C ± 2°C und einer wassergesättigten, zumindest im Wesentlichen CO₂-freien Atmosphäre ausgesetzt. Das Gefäß der Testkompostieranlage wird während des Kompostierversuchs wöchentlich geschüttelt. Ein Wasseranteil der Mischung aus Inokulum und den biodegradablen Kunststofffasern beträgt insbesondere zumindest im Wesentlichen konstante 50 %. Ein pH-Wert der Mischung aus Inokulum und den biodegradablen Kunststofffasern beträgt insbesondere während des gesamten Kompostierversuchs zwischen 7,0 und 9,0.

Zudem wird vorgeschlagen, dass bei dem Kompostierversuch an zumindest einem Testfaserstück zumindest einer zumindest teilweise biodegradablen Kunststofffaser der Schutzvorrichtung, insbesondere an zumindest einem Testfaserbündelstück eines zumindest teilweise biodegradablen Faserbündels der Schutzvorrichtung, höchstens 10 %, vorzugsweise höchstens 15 %, vorteilhaft höchstens 20 % und bevorzugt höchstens 30 % des Testfaserstücks, insbesondere des Testfaserbündelstücks, nach einem Zeitraum von 0,5 Jahren, vorzugsweise von 2 Jahren, vorteilhaft von 4 Jahren, besonders vorteilhaft von 6 Jahren, bevorzugt von 8 Jahren und besonders bevorzugt von 10 Jahren, biologisch abgebaut ist. Dadurch kann vorteilhaft eine hohe Stabilität und/oder Sicherheit der Schutzvorrichtung während der ersten Vegetationsperiode erreicht werden. Zudem kann vorteilhaft eine gute Stützung einer anwachsenden Vegetation während der ersten Vegetationsperiode ermöglicht werden. Außerdem kann vorteilhaft ein Erosionsschutz durch die Kunststofffasern zumindest so lange aufrechterhalten werden solange noch keine ausreichende Vegetation zu dem Erosionsschutz beitragen kann, d.h. zumindest über die erste Vegetationsperiode. Des Weiteren wird eine Böschungssicherung mit der Schutzvorrichtung vorgeschlagen. Dadurch kann vorteilhaft eine Böschungssicherung mit einer hohen Umweltverträglichkeit bereitgestellt werden.

Zudem wird eine Verwendung der Schutzvorrichtung bei einer Neubegrünung und/oder einer Wiederbegrünung einer hanglagigen und erosionsgefährdeten Erdoberfläche, vorgeschlagen. Dadurch kann insbesondere eine effiziente Neubegrünung, insbesondere durch vorteilhafte Keimbedingungen und/oder ein vorteilhaftes Verhindern eines Ausschwemmens von verteilten Samen bei Starkregenfällen, ermöglicht werden.

Ferner wird ein Verfahren zu einer Herstellung der Schutzvorrichtung vorgeschlagen, bei welchem in zumindest einem Strukturierungsschritt ausgangs voneinander getrennt ausgebildete zumindest zu einem Großteil biodegradable Kunststofffasern, insbesondere mittels einer Erwärmung der Kunststofffasern, derart kraft- und/oder stoffschlüssig miteinander verbunden werden, dass die zumindest zu einem Großteil biodegradablen Kunststofffasern eine erfindungsgemäß krallmattenartige Monofilament-Wirrgelege-Struktur, mit einer wesentlich dreidimensionalen Strukturierung ausbilden. Dadurch kann insbesondere eine Schutzvorrichtung mit vorgenannten vorteilhaften Eigenschaften hergestellt werden.

Außerdem wird vorgeschlagen, dass die zumindest zu einem Großteil biodegradablen und zufällig orientierten Kunststofffasern in zumindest einem weiteren Verfahrensschritt, welcher dem Strukturierungsschritt vorangeht, schichtartig oberhalb und unterhalb eines Drahtgeflechts angeordnet werden, so dass das Drahtgeflecht während dem Strukturierungsschritt von den Kunststofffasern umflochten wird. Dadurch kann insbesondere eine Schutzvorrichtung mit vorgenannten vorteilhaften Eigenschaften hergestellt werden, welche durch ein Drahtgeflecht vorteilhaft zusätzlich verstärkt ist.

Die erfindungsgemäße Schutzvorrichtung, die erfindungsgemäße Böschungssicherung, die erfindungsgemäße Verwendung der Schutzvorrichtung und/oder das erfindungsgemäße Verfahren zu einer Herstellung der Schutzvorrichtung soll hierbei nicht auf die oben beschriebene Anwendung und Ausführungsform beschränkt sein. Insbesondere kann die erfindungsgemäße Schutzvorrichtung, die erfindungsgemäße Böschungssicherung, die erfindungsgemäße Verwendung der Schutzvorrichtung und/oder das erfindungsgemäße Verfahren zu einer Herstellung der Schutzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Seitenansicht einer Böschungssicherung mit einer Schutzvorrichtung,
- Fig. 2: eine schematische Draufsicht auf die Schutzvorrichtung,
- Fig. 3: eine schematische Seitenansicht der Schutzvorrichtung,
- Fig. 4: eine schematische Draufsicht auf die Schutzvorrichtung mit einem Drahtgeflecht,
- Fig. 5: eine schematische Seitenansicht der Schutzvorrichtung mit dem Drahtgeflecht,
- Fig. 6: eine schematische Ansicht einer Zugtestvorrichtung,
- Fig. 7: ein Ablaufdiagramm eines Testzugversuchs und eines Testdehnversuchs mittels der Zugtestvorrichtung,
- Fig. 8: eine Bewitterungskammer zu einer Durchführung eines Bestrahlungs- und Bewitterungstests,
- Fig. 9: ein Ablaufdiagramm eines Verfahrens zu einer Herstellung der Schutzvorrichtung mit dem Drahtgeflecht,
- Fig. 10: eine schematische Draufsicht auf eine alternative nicht erfindungsgemäße Schutzvorrichtung und
- Fig. 11: eine schematische Seitenansicht auf die alternative nicht erfindungsgemäße Schutzvorrichtung.

### Beschreibung der Ausführungsbeispiele

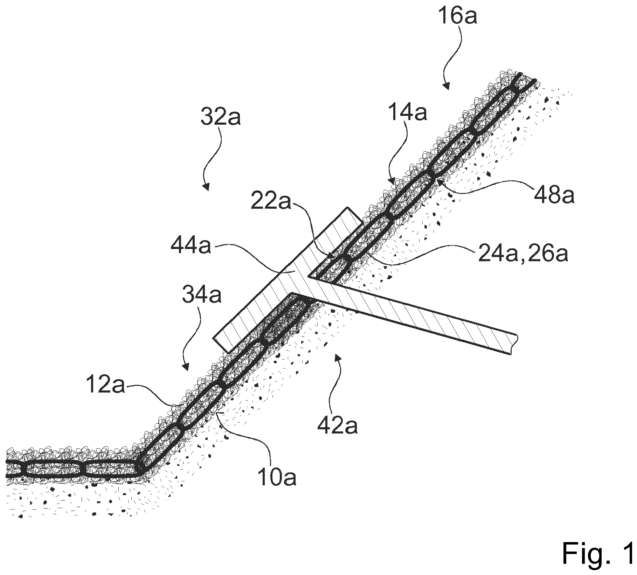

Fig. 1 zeigt einen seitlichen Schnitt durch eine Böschungssicherung 32a und das darunter liegende Erdreich und/oder Gestein. Die Böschungssicherung 32a ist zu einer Sicherung einer Böschung gegen Erosion vorgesehen. Die Böschungssicherung 32a ist zu einer Sicherung der Böschung gegen Erdrutschungen und/oder Auswaschungen von Böschungsmaterial vorgesehen. Die Böschungssicherung 32a umfasst eine Schutzvorrichtung 34a. Die Schutzvorrichtung 34a ist als eine Erosionsschutzvorrichtung ausgebildet. Die Schutzvorrichtung 34a ist als eine Geotextilie ausgebildet. Die Schutzvorrichtung 34a ist dazu vorgesehen, flächig über eine zu schützende Oberfläche 10a der Böschung ausgebreitet zu werden. Die Schutzvorrichtung 34a ist dazu vorgesehen, eine Erdoberfläche der Böschung flächig zu bedecken. Die Schutzvorrichtung 34a ist bahnenförmig und zu einem Transport aufrollbar ausgebildet. Zu einer Bedeckung der zu schützenden Oberfläche 10a werden Bahnen der Schutzvorrichtung 34a auf der Oberfläche 10a entrollt, an den Seitenrändern einzelner Bahnen miteinander verbunden und mittels Spannseilen und Verankerungselementen 42a auf der zu schützenden Oberfläche 10a ausgebreitet und befestigt. Die Schutzvorrichtung 34a bildet eine Krallmatte aus.

Die Böschungssicherung 32a umfasst zumindest ein Verankerungselement 42a. Das Verankerungselement 42a ist als ein Erd- und/oder Felsnagel ausgebildet. Das Verankerungselement 42a ist zu einer ortsfesten Befestigung der Schutzvorrichtung 34a auf der Oberfläche 10a der Böschung vorgesehen. Das Verankerungselement 42a ist zu der Befestigung der Schutzvorrichtung 34a senkrecht oder schräg in das Erdreich und/oder in den Fels der Böschung, insbesondere durch Bohren oder Einschlagen, eingebracht. Das Verankerungselement 42a umfasst zumindest eine Ankerplatte 44a. Die Ankerplatte 44a kann einstückig mit dem Verankerungselement 42a, beispielsweise als Nagelkopf, oder getrennt von dem Verankerungselement 42a, beispielsweise als eine Krallplatte, ausgebildet sein. Die Ankerplatte 44a ist dazu vorgesehen, eine Haltekraft des Verankerungselements 42a zumindest auf die Schutzvorrichtung 34a zu übertragen. Die Böschungssicherung 32a weist eine Vielzahl an Verankerungselementen 42a auf, welche mit regelmäßigen oder unregelmäßigen Abständen über die Gesamtfläche der Schutzvorrichtung 34a verteilt angeordnet sind, wobei die Größe der Abstände abhängig ist von einer Beschaffenheit der Böschung (Topographie und Geologie).

Die Schutzvorrichtung 34a ist zumindest zu einer Verwendung bei einer Neubegrünung und/oder einer Wiederbegrünung der hanglagigen und dadurch erosionsgefährdeten Oberfläche 10a vorgesehen.

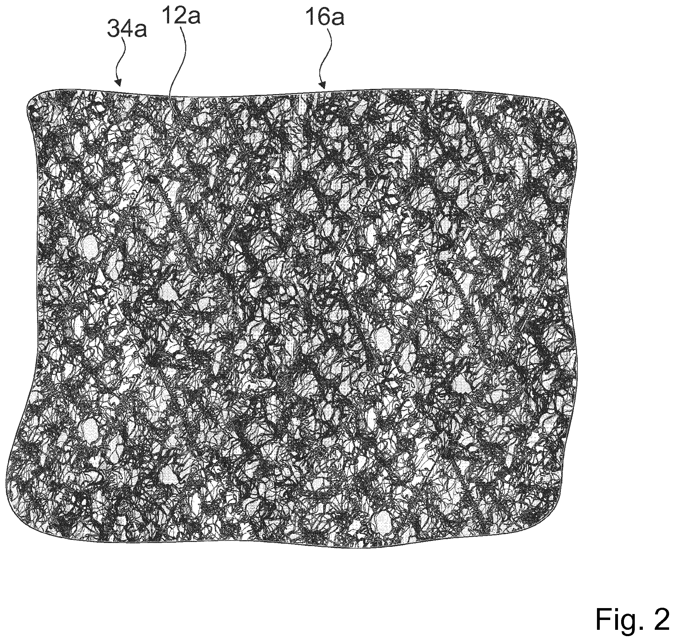

Fig. 2 zeigt einen Ausschnitt einer Draufsicht auf die Schutzvorrichtung 34a. Die Schutzvorrichtung 34a ist zumindest zu einem Großteil aus einer Vielzahl von Kunststofffasern 12a ausgebildet. Die Kunststofffasern 12a sind miteinander kraft- und/oder stoffschlüssig verbunden. Zumindest ein Großteil der Kunststofffasern 12a der Vielzahl an Kunststofffasern 12a ist zumindest zu einem Großteil biodegradabel. Die Kunststofffasern 12a sind zufällig zueinander angeordnet. Die Kunststofffasern 12a sind zumindest zu einem Teil als Endlosfasern ausgebildet. Die Kunststofffasern 12a sind zumindest zu einem Teil als Stapelfasern mit einer Maximallänge von 20 cm ausgebildet. Die Kunststofffasern 12a erstrecken sich in alle drei Raumrichtungen. Die Kunststofffasern 12a sind filamentartig ausgebildet. Die Kunststofffasern 12a bilden Monofilamente aus. Die Kunststofffasern 12a weisen Durchmesser zwischen 0,15 mm und 0,4 mm auf. Die Kunststofffasern 12a sind hydrophob.

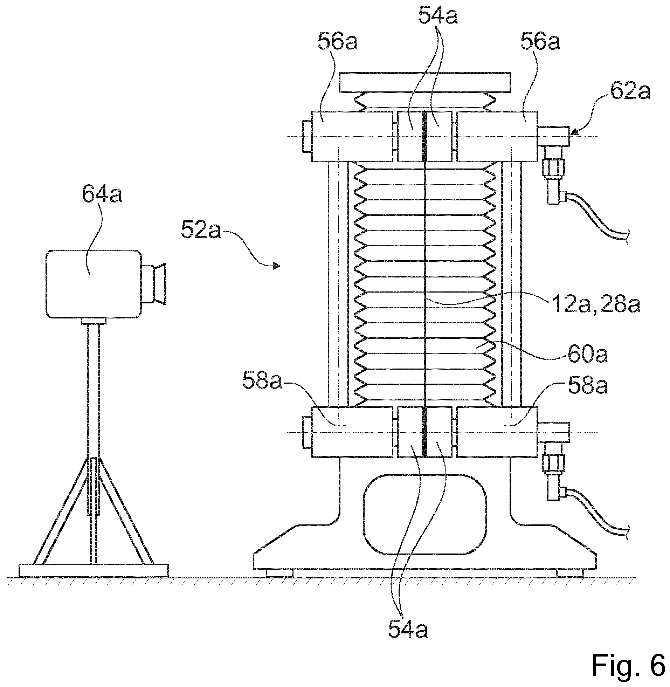

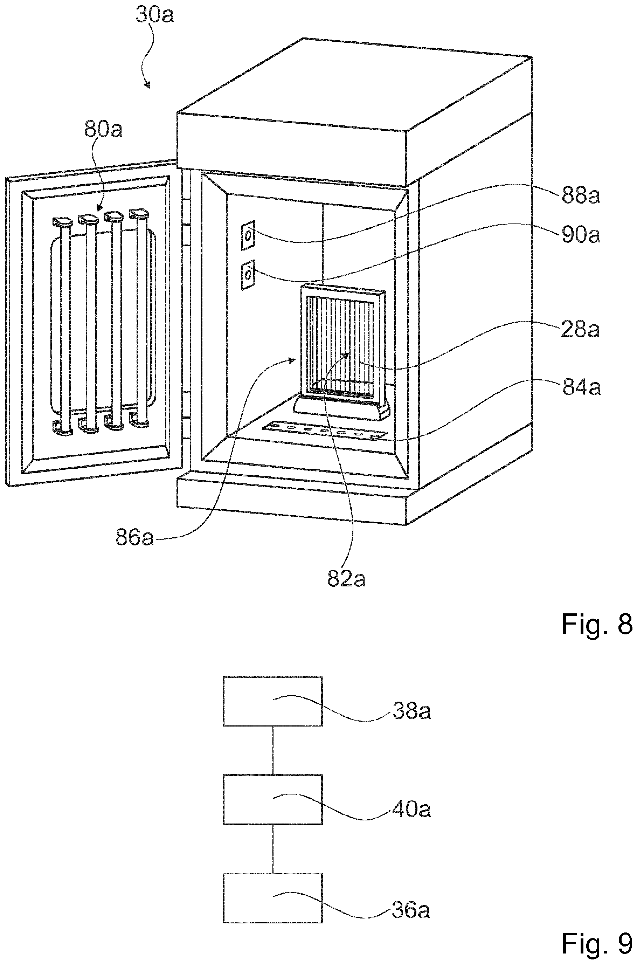

Die biodegradable Kunststofffaser 12a und/oder ein Testfaserstück 28a (vgl. auch Fig. 6 oder Fig. 8) der biodegradablen Kunststofffaser 12a ist bei einem Kompostierversuch nach einem Zeitraum von 2 Jahren zumindest zu 10 % biologisch abgebaut. Die biodegradable Kunststofffaser 12a und/oder das Testfaserstück 28a der biodegradablen Kunststofffaser 12a ist bei einem Kompostierversuch nach einem Zeitraum von 0,5 Jahren höchstens zu 10 % biologisch abgebaut oder desintegriert. Die Kunststofffasern 12a weisen zumindest in einem neuwertigen Zustand eine mittlere Festigkeit höher als 70 MPa auf. Die Kunststofffasern 12a weisen zumindest in dem neuwertigen Zustand eine mittlere Dehnbarkeit höher als 500 % auf. Die Kunststofffasern 12a sind zumindest in dem neuwertigen Zustand thermoplastisch verformbar.

Zumindest ein Teil der Kunststofffasern 12a sind zumindest zu einem Teil aus einem Polylactid-Kunststoff (PLA) ausgebildet. Zumindest ein Teil der Kunststofffasern 12a sind zumindest zu einem Teil aus einem biodegradablen Kunststoff, welcher verschieden von einem Polylactid-Kunststoff ist, ausgebildet. Beispielsweise sind die Kunststofffasern 12a zumindest zu einem Teil aus einer Polyhydroxybuttersäure (PHBV), einem Polycaprolacton (PCL), einem Polybutylensuccinat (PBS) und/oder einem Polybutylenadipat-terephthalat (PBAT) ausgebildet. Zumindest ein Teil der Kunststofffasern 12a sind zumindest zu einem Teil aus einem spinnbaren Blend zumindest zweier biodegradabler Kunststoffe ausgebildet. Zumindest ein Bestandteil des spinnbaren Blends ist als ein Polylactid-Kunststoff (PLA) ausgebildet. Ein Volumenanteil des Polylactid-Kunststoffs (PLA) an den aus dem spinnbaren Blend ausgebildeten Kunststofffasern 12a beträgt zumindest 40 %.

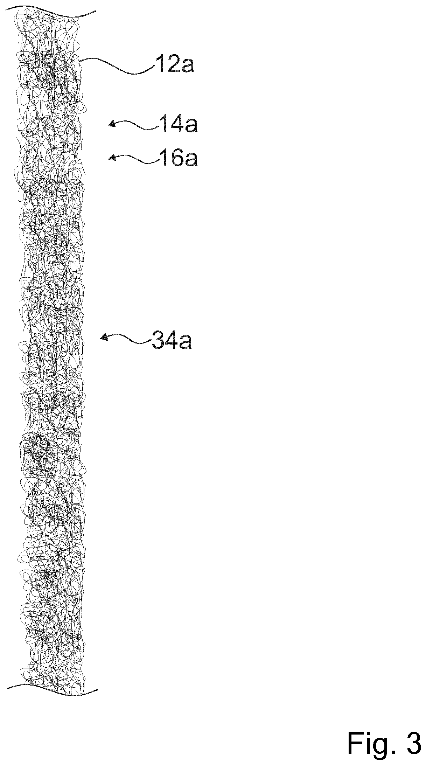

Fig. 3 zeigt eine Seitenansicht auf die Schutzvorrichtung 34a. Die Schutzvorrichtung 34a weist eine wesentliche dreidimensionale Strukturierung 14a auf. Die Seitenansicht aus Fig. 3 zeigt die Schutzvorrichtung 34a aus einer beliebigen Blickrichtung. Die Kunststofffasern 12a sind derart zueinander angeordnet, dass sie die wesentliche dreidimensionale Strukturierung 14a ausbilden. Die Schutzvorrichtung 34a weist eine Erstreckung senkrecht zu einer Haupterstreckungsebene der Schutzvorrichtung 34a von mindestens 1 cm auf. Die Kunststofffasern 12a bilden ein Wirrgelege 16a aus. Das Wirrgelege 16a ist als ein dreidimensionales Wirrgelege 16a ausgebildet. Das Wirrgelege 16a ist als ein monofiles Wirrgelege 16a ausgebildet. Die Kunststofffasern 12a verleihen der Schutzvorrichtung 34a eine Monofilament-Wirrgelege-Struktur. Das Wirrgelege 16a, insbesondere die Monofilament-Wirrgelege-Struktur, weist eine Vielzahl an Hohlräumen zwischen den einzelnen Kunststofffasern 12a (Monofilamenten) auf. Das Wirrgelege 16a weist eine Porenziffer von mehr als 90 % auf. Das Wirrgelege 16a weist ein Flächengewicht von weniger als 700 g/m², vorzugsweise weniger als 500 g/m², auf. Die Hohlräume sind zumindest zu einer Aufnahme von Pflanzensamen vorgesehen. Das Wirrgelege 16a ist derart ausgebildet, dass die Kunststofffasern 12a des Wirrgeleges 16a eine besonders große Oberfläche ausbilden. Die Oberfläche des Wirrgeleges 16a ist dazu vorgesehen, eine Bildung von Tautropfen zu begünstigen. Die Kunststofffasern 12a des Wirrgeleges 16a sind zufällig ausgerichtet. Die Kunststofffasern 12a des Wirrgeleges 16a sind zufällig verteilt. Die Kunststofffasern 12a des Wirrgeleges 16a sind unregelmäßig ausgerichtet. Die Kunststofffasern 12a des Wirrgeleges 16a sind unregelmäßig verteilt.

Es wird insbesondere darauf hingewiesen, dass die Figuren 2 bis 5 schematische und beispielhafte Darstellungen sind, d.h. insbesondere genaue Anordnungen von Kunststofffasern 12a innerhalb eines Wirrgeleges 16a oder Regelmäßigkeiten in den gezeigten Anordnungen der Kunststofffasern 12a sind daher rein zeichnerisch begründet und entsprechen nicht notwendigerweise realen Anordnungen von Kunststofffasern 12a in einem Wirrgelege 16a.

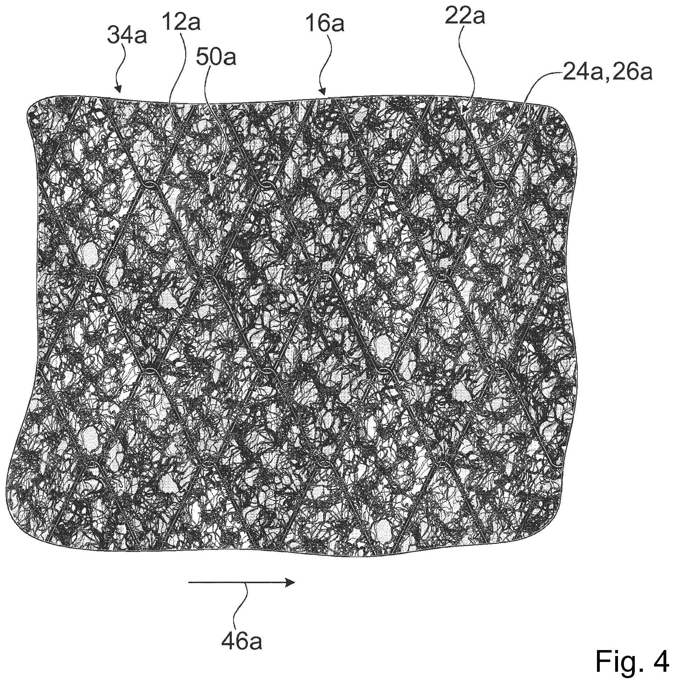

Fig. 4 zeigt einen Ausschnitt einer Draufsicht auf die Schutzvorrichtung 34a mit einem in das Wirrgelege 16a aus Kunststofffasern 12a eingearbeiteten Drahtgeflecht 22a. Die Schutzvorrichtung 34a weist das Drahtgeflecht 22a auf. Das Drahtgeflecht 22a ist als ein Maschendrahtgeflecht ausgebildet. Das Drahtgeflecht 22a ist aus miteinander verflochtenen wendelförmigen Längselementen 24a ausgebildet. Die Längselemente 24a sind aus einem Draht 26a ausgebildet. Im vorliegenden Fall weist der Draht 26a einen Durchmesser von 2 mm auf. Es ist auch denkbar, dass ein Längselement 24a als ein Drahtbündel, eine Drahtlitze, ein Drahtseil oder dergleichen ausgebildet ist. Ferner ist denkbar, dass ein Draht 26a einen anderen Durchmesser wie beispielsweise weniger als 1 mm oder etwa 1 mm oder etwa 2 mm oder etwa 4 mm oder etwa 5 mm oder etwa 6 mm oder einen noch größeren Durchmesser aufweist. Der Draht 26a ist zumindest teilweise aus einem hochfesten Stahl ausgebildet. Der Draht 26a weist eine Zugfestigkeit von wenigstens 500 N mm⁻² auf. Im vorliegenden Fall weist der Draht 26a eine Zugfestigkeit von zumindest 1770 N mm⁻² auf. Selbstverständlich sind, wie oben erwähnt, jedoch auch andere Zugfestigkeiten denkbar, insbesondere auch Zugfestigkeiten von mehr als 2200 N mm⁻². Insbesondere ist denkbar, dass der Draht 26a aus höchstfestem Stahl gefertigt ist. Das Drahtgeflecht weist eine Gesamtzugfestigkeit von zumindest 53 kN/m auf.

Die Längselemente 24a weisen eine Anti-Korrosionsbeschichtung auf. Die Anti-Korrosionsbeschichtung ist als eine Zn/AI Beschichtung ausgebildet. Der Draht 26a mit der Anti-Korrosionsbeschichtung bildet einen Klasse A Draht aus. Die Längselemente 24a weisen eine Form einer abgeflachten Spirale auf. Die Längselemente 24a weisen eine Längserstreckungsrichtung 46a auf. Die Längselemente 24a sind in einer Richtung senkrecht zu der Längserstreckungsrichtung 46a ineinander verhakt. Die miteinander verhakten und/oder miteinander verflochtenen Längselemente 24a sind ineinander eingedreht. Die miteinander verflochtenen Längselemente 24a des Drahtgeflechts 22a bilden rhomboide Maschen 50a aus. Die rhomboiden Maschen 50a des Drahtgeflechts 22a weisen Abmessungen von 101 mm x 175 mm auf. Selbstverständlich sind auch Maschen 50a mit größeren oder kleineren Abmessungen denkbar. Das Drahtgeflecht 22a ist in eine Richtung senkrecht zu der Längserstreckungsrichtung 46a aufrollbar.

Das Drahtgeflecht 22a ist von den Kunststofffasern 12a umgeben. Das Drahtgeflecht 22a ist von den Kunststofffasern 12a umflochten. Das Drahtgeflecht 22a ist von den Kunststofffasern 12a umschlungen. Das Drahtgeflecht 22a ist in das Wirrgelege 16a eingearbeitet. Kunststofffasern 12a sind unterhalb und oberhalb des Drahtgeflechts 22a angeordnet. Das Wirrgelege 16a ist um das Drahtgeflecht 22a gelegt. Das Drahtgeflecht 22a ist nicht zerstörungsfrei aus dem Wirrgelege 16a entnehmbar. Zumindest ein Teil der Kunststofffasern 12a ist stoffschlüssig mit dem Drahtgeflecht 22a verbunden. Zu der stoffschlüssigen Verbindung der Kunststofffasern 12a mit dem Drahtgeflecht 22a sind die Kunststofffasern 12a zumindest teilweise auf das Drahtgeflecht 22a aufgeschmolzen und/oder aufgepresst.

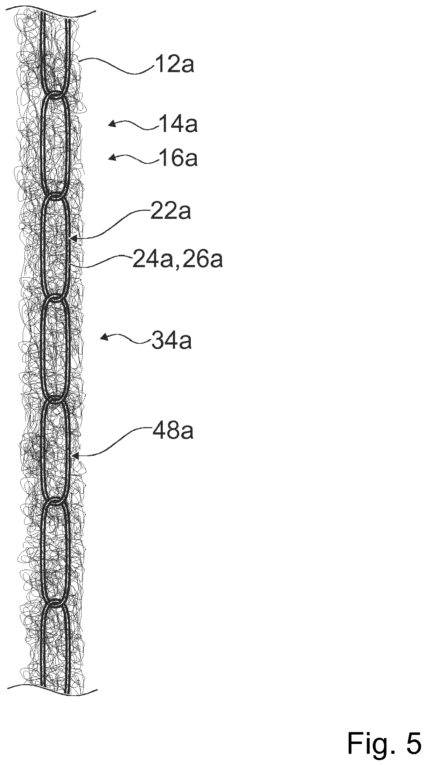

Fig. 5 zeigt eine Seitenansicht auf die Schutzvorrichtung 34a mit dem Drahtgeflecht 22a. Die Seitenansicht aus Fig. 5 zeigt die Schutzvorrichtung 34a aus einer Blickrichtung parallel zu der Längserstreckungsrichtung 46a des Längselements 24a des Drahtgeflechts 22a der Schutzvorrichtung 34a. Das Drahtgeflecht 22a weist eine dreidimensionale, matratzenartige Struktur 48a auf. Die matratzenartige Struktur 48a verleiht dem Drahtgeflecht 22a eine Federkapazität in eine Richtung senkrecht zu einer Haupterstreckungsebene des Drahtgeflechts 22a. Eine Erstreckung des Drahtgeflechts 22a in die Richtung senkrecht zu der Haupterstreckungsebene des Drahtgeflechts 22a beträgt zumindest 70 %, vorzugsweise zumindest 90 % einer Erstreckung des Wirrgeleges 16a in die Richtung senkrecht zu der Haupterstreckungsebene des Drahtgeflechts 22a. Die Erstreckung des Drahtgeflechts 22a in die Richtung senkrecht zu einer Haupterstreckungsebene des Drahtgeflechts 22a beträgt zumindest ein Vierfaches, vorzugsweise zumindest ein Sechsfaches, eines Durchmessers des Drahts 26a des Drahtgeflechts 22a.

Fig. 6 zeigt eine schematische Ansicht einer Zugtestvorrichtung 52a. Die Zugtestvorrichtung 52a ist zu einer Durchführung eines Testzugversuchs vorgesehen. Die Zugtestvorrichtung 52a dient zugleich auch als eine Dehntestvorrichtung. Die Dehntestvorrichtung ist zu einer Durchführung eines Testdehnversuchs vorgesehen. Die Zugtestvorrichtung 52a weist zumindest zwei Paare an Klemmbacken 54a auf. Die Klemmbacken 54a sind pneumatisch schließ- und/oder öffenbar. Die Klemmbacken 54a sind zu einem Klemmen und/oder Einspannen von Testfaserstücken 28a vorgesehen. Die Klemmbacken 54a sind an Halteelementen 56a, 58a der Zugtestvorrichtung 52a befestigt. Zumindest ein oberes Halteelement 56a ist vertikal entlang eines Turms 60a der Zugtestvorrichtung 52a verfahrbar gelagert.

Das Testfaserstück 28a ist identisch zu einer Kunststofffaser 12a einer Schutzvorrichtung 34a ausgebildet. Testfaserstücke 28a weisen einen zumindest im Wesentlichen identischen Durchmesser zu den Kunststofffasern 12a auf. Testfaserstücke 28a weisen eine zumindest im Wesentlichen identische Materialzusammensetzung wie die Kunststofffasern 12a auf. Das Testfaserstück 28a ist zumindest im Wesentlichen gerade.

Zu der Durchführung des Zugtestversuchs sind die Klemmbacken 54a motorgesteuert auseinander bewegbar. Die Bewegung der Klemmbacken 54a erfolgt dabei linear in eine Richtung, die zumindest im Wesentlichen parallel zu einer Längsrichtung des eingespannten Testfaserstücks 28a verläuft. Die Zugtestvorrichtung 52a weist zumindest ein Kraftsensorelement 62a auf. Das Kraftsensorelement 62a ist zu einer Sensierung der Festigkeit des Testfaserstücks 28a vorgesehen. Das Kraftsensorelement 62a ist dazu vorgesehen, eine auf das Testfaserstück 28a wirkende Zugkraft zu sensieren. Die Zugtestvorrichtung 52a weist zumindest ein Distanzsensorelement 64a auf. Das Distanzsensorelement 64a ist zu einer Sensierung einer maximalen Dehnstrecke des Testfaserstücks 28a bis zu einem Reißen des Testfaserstücks 28a vorgesehen. Das Distanzsensorelement 64a ist in Zusammenwirkung mit dem Kraftsensorelement 62a dazu vorgesehen, eine Dehnbarkeit des Testfaserstücks 28a zu sensieren. Das Distanzsensorelement 64a ist insbesondere als ein optischer Distanzsensor, beispielsweise eine Kamera, ausgebildet. Alternativ kann das Distanzsensorelement 64a beispielsweise als eine Messeinrichtung einer Spindel oder eines Schrittmotors ausgebildet sein, welche einen durch die Spindel oder durch den Schrittmotor zurückgelegten Verfahrweg detektiert.

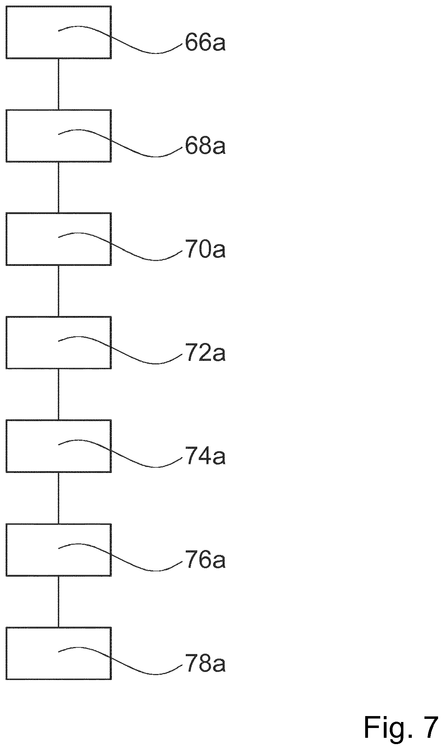

Fig. 7 zeigt ein Ablaufdiagramm eines Testzugversuchs und eines Testdehnversuchs, insbesondere eines Verfahrens zu einer Messung der Festigkeit und/oder der Dehnbarkeit eines Testfaserstücks 28a. In zumindest einem Verfahrensschritt 66a wird das Testfaserstück 28a neu hergestellt oder aus einer neu hergestellten Schutzvorrichtung 34a entnommen. In zumindest einem weiteren Verfahrensschritt 68a wird ein Durchmesser des Testfaserstücks 28a durch Messen bestimmt. In zumindest einem weiteren Verfahrensschritt 70a wird das Testfaserstück 28a in die Klemmbacken 54a der Zugtestvorrichtung 52a eingespannt. In zumindest einem weiteren Verfahrensschritt 72a werden die Klemmbacken 54a kontrolliert, insbesondere mit einer Geschwindigkeit von 20 mm/min, auseinanderbewegt, wodurch das Testfaserstück 28a gedehnt wird und einer Zugbelastung ausgesetzt wird. Während dem Auseinanderziehen des Testfaserstücks 28a werden die in dem Testfaserstück 28a auftretenden Zugkräfte von dem Kraftsensorelement 62a registriert und aufgezeichnet. In zumindest einem weiteren Verfahrensschritt 74a wird das Auseinanderbewegen der Klemmbacken 54a gestoppt. Das Auseinanderbewegen der Klemmbacken 54a wird gestoppt sobald ein Reißen des Testfaserstücks 28a detektiert wurde, beispielsweise von dem Kraftsensorelement 62a durch einen abrupten Abfall der gemessenen Zugkraft. In zumindest einem weiteren Verfahrensschritt 76a wird von dem Distanzsensorelement 64a die bis zu einem Reißen des Testfaserstücks 28a durch die Klemmbacken 54a zurückgelegte Distanz gemessen. Durch einen Vergleich mit einem initialen Abstand der Klemmbacken 54a wird eine Dehnbarkeit des Testfaserstücks 28a errechnet. In zumindest einem weiteren Verfahrensschritt 78a wird von dem Kraftsensorelement 62a die Festigkeit des Testfaserstücks 28a aus der maximalen gemessenen Zugkraft vor einem Reißen des Testfaserstücks 28a ermittelt.

Bei dem Testzugversuch weist das Testfaserstück 28a eine Festigkeit höher als 70 MPa, vorzugsweise höher als 80 MPa auf. Bei dem Testdehnversuch weist das Testfaserstück 28a eine Dehnbarkeit höher als 500 %, vorzugsweise höher als 600 % auf. Das Wirrgelege 16a ist aus Kunststofffasern 12a ausgebildet, welche zu dem Testfaserstück 28a zumindest im Wesentlichen identisch sind und somit die gleichen Festigkeiten und Dehnbarkeiten im unbewitterten Zustand aufweisen.

Fig. 8 zeigt eine Bewitterungskammer 30a. Die Bewitterungskammer 30a ist zu einer Durchführung eines Bestrahlungs- und Bewitterungstests vorgesehen. Die Bewitterungskammer 30a weist zumindest eine Haltevorrichtung 86a auf, welche zu einer Halterung, insbesondere einem Einspannen, zumindest eines Testfaserstücks 28a und/oder zumindest eines Testfaserbündelstücks 82a vorgesehen ist. Die Bewitterungskammer 30a weist zumindest eine Bestrahlungseinheit 80a auf. Die Bestrahlungseinheit 80a ist zu einer Bestrahlung eines in der Bewitterungskammer 30a eingelagerten, vorzugsweise in der Haltevorrichtung 86a eingespannten, Testfaserstücks 28a oder Testfaserbündelstücks 82a mit UV-Licht vorgesehen. Das UV-Licht weist ein Spektrum auf, welches dem UV-Anteil von Tageslicht ähnelt. Die Bestrahlungseinheit 80a umfasst zumindest eine Xenon-Leuchte. Die Bewitterungskammer 30a weist zumindest eine Sprüheinheit 84a auf. Die Sprüheinheit 84a ist zu einem zyklischen Besprühen des in der Bewitterungskammer 30a eingelagerten, vorzugsweise in der Haltevorrichtung 86a eingespannten, Testfaserstücks 28a oder Testfaserbündelstücks 82a mit Sprühwasser vorgesehen. Das Sprühwasser ist insbesondere, je nach Art der Bewitterung, deionisiertes Wasser, regenwasserähnliches Süßwasser oder meerwasserähnliches Salzwasser. Zudem weist die Bewitterungskammer 30a einen Temperatursensor 88a zu einer Bestimmung einer Bewitterungskammertemperatur und/oder einer Schwarzstandardtemperatur des Testfaserstücks 28a und/oder des Testfaserbündelstücks 82a auf. Außerdem weist die Bewitterungskammer 30a einen Feuchtesensor 90a zu einer Bestimmung einer relativen Feuchte innerhalb der Bewitterungskammer 30a auf. Die Bewitterungskammer 30a weist eine Steuer- und/oder Regeleinheit (nicht gezeigt) auf, welche zumindest dazu vorgesehen ist, die Sprüheinheit 84a und die Bestrahlungseinheit 80a zu steuern und/oder zu regeln sowie zumindest die Bewitterungskammertemperatur und die relative Luftfeuchte in der Bewitterungskammer 30a einzustellen. Die Bewitterungskammer 30a ist zu einer Durchführung eines Bestrahlungs- und Bewitterungstests nach den Vorgaben des Verfahrens A, Zyklus 1 der Norm DIN EN ISO 4892-2:2013-06 vorgesehen.

Das Testfaserstück 28a und/oder das Testfaserbündelstück 82a weist nach einem Durchlaufen eines 500-stündigen Bestrahlungs- und Bewitterungstests in der Bewitterungskammer 30a, bei welchem das Testfaserstück 28a und/oder das Testfaserbündelstück 82a zumindest zyklisch zumindest einer Bestrahlung mit UV-Licht und zumindest einer Bewitterung durch Sprühwasser ausgesetzt ist, bei dem Testzugversuch mittels der Zugtestvorrichtung 52a eine Restfestigkeit von zumindest 66 % einer initialen Festigkeit des Testfaserstücks 28a und/oder das Testfaserbündelstück 82a in einem unbewitterten Zustand auf. Das Testfaserstück 28a und/oder das Testfaserbündelstück 82a weist nach einem Durchlaufen des 500-stündigen Bestrahlungs- und Bewitterungstests in der Bewitterungskammer 30a, bei welchem das Testfaserstück 28a zumindest zyklisch zumindest einer Bestrahlung mit UV-Licht und zumindest einer Bewitterung durch Wasser ausgesetzt ist, bei dem Testdehnversuch eine Restdehnbarkeit von zumindest 50 % einer initialen Dehnbarkeit des Testfaserstücks 28a und/oder das Testfaserbündelstück 82a in einem unbewitterten Zustand auf. Das Wirrgelege 16a ist aus Kunststofffasern 12a ausgebildet, welche zu dem Testfaserstück 28a und/oder dem Testfaserbündelstück 82a zumindest im Wesentlichen identisch sind und somit die gleichen Festigkeiten und Dehnbarkeiten im bewitterten Zustand aufweisen.

Fig. 9 zeigt ein Ablaufdiagramm eines Verfahrens zu einer Herstellung der Schutzvorrichtung 34a mit dem Drahtgeflecht 22a. In zumindest einem Verfahrensschritt 38a werden biodegradable Kunststofffasern 12a mittels Extrusion hergestellt. einem weiteren Verfahrensschritt 40a werden zufällig orientierte biodegradable Kunststofffasern 12a schichtartig oberhalb und unterhalb eines Drahtgeflechts 22a angeordnet, so dass das Drahtgeflecht 22a in einem auf den Verfahrensschritt 40a folgenden Strukturierungsschritt 36a von den Kunststofffasern 12a umflochten werden. In dem Strukturierungsschritt 36a werden ausgangs voneinander getrennt ausgebildete zumindest zu einem Großteil biodegradable Kunststofffasern 12a derart kraft- und/oder stoffschlüssig miteinander verbunden, dass die zumindest zu einem Großteil biodegradablen Kunststofffasern 12a eine mattenartige Struktur mit einer wesentlich dreidimensionalen Strukturierung 14a ausbilden.

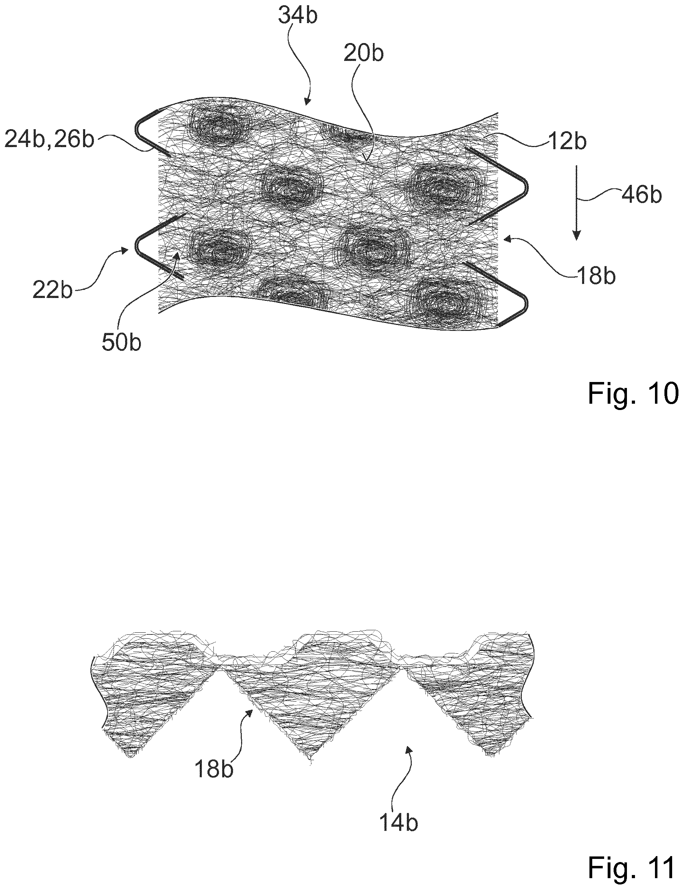

In den Figuren 10 und 11 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 9, verwiesen werden kann. Zur Unterscheidung der Ausführungsbeispiele ist der Buchstabe a den Bezugszeichen des Ausführungsbeispiels in den Figuren 1 bis 9 nachgestellt. In dem Ausführungsbeispiel der Figuren 10 und 11 ist der Buchstabe a durch den Buchstaben b ersetzt.

Fig. 10 zeigt eine Draufsicht auf eine alternative nicht erfindungsgemäße Schutzvorrichtung 34b und Fig. 11 zeigt eine Seitenansicht auf die alternative nicht erfindungsgemäße Schutzvorrichtung 34b. Die Seitenansicht aus Fig. 11 zeigt die Schutzvorrichtung 34b aus einer Blickrichtung senkrecht zu einer Längserstreckungsrichtung 46b eines Längselements 24b eines Drahtgeflechts 22b der Schutzvorrichtung 34b. Die Schutzvorrichtung 34b ist zu einem Großteil aus einer Vielzahl von miteinander kraft- und/oder stoffschlüssig verbundenen Kunststofffasern 12b ausgebildet. Die Kunststofffasern 12b sind als Regeneratfasern ausgebildet. Die Kunststofffasern 12b sind als Viskosefasern ausgebildet. Die Kunststofffasern 12b sind derart angeordnet, dass sie eine wesentliche dreidimensionale Strukturierung 14b ausbilden. Die Kunststofffasern 12b bilden eine vliesartige Struktur 18b aus. Die vliesartige Struktur 18b ist im Wesentlichen frei von Hohlräumen. Die vliesartige Struktur 18b ist blickdicht aber wasserdurchlässig. Die vliesartige Struktur 18b weist einen Filtereffekt für Flüssigkeiten auf. Die vliesartige Struktur 18b bildet eine dreidimensional strukturierte, geschlossene Oberflächenebene 20b aus. Die vliesartige Struktur 18b ist eierkartonartig geformt. Die dreidimensional strukturierte Oberflächenebene 20b ist dazu vorgesehen, eine Gleitreibung mit einem Untergrund zu erhöhen. Vertiefungen in der vliesartigen Struktur 18b sind dazu vorgesehen, Pflanzensamen aufzunehmen.

### Bezugszeichen

- 10: Oberfläche
- 12: Kunststofffaser
- 14: Dreidimensionale Strukturierung
- 16: Wirrgelege
- 18: Vliesartige Struktur
- 20: Oberflächenebene
- 22: Drahtgeflecht
- 24: Längselement
- 26: Draht
- 28: Testfaserstück
- 30: Bewitterungskammer
- 32: Böschungssicherung
- 34: Schutzvorrichtung
- 36: Strukturierungsschritt
- 38: Verfahrensschritt
- 40: Verfahrensschritt
- 42: Verankerungselement
- 44: Ankerplatte
- 46: Längserstreckungsrichtung
- 48: Matratzenartige Struktur
- 50: Masche
- 52: Zugtestvorrichtung
- 54: Klemmbacken
- 56: Halteelement
- 58: Halteelement
- 60: Turm
- 62: Kraftsensorelement
- 64: Distanzsensorelement
- 66: Verfahrensschritt
- 68: Verfahrensschritt
- 70: Verfahrensschritt
- 72: Verfahrensschritt
- 74: Verfahrensschritt
- 76: Verfahrensschritt
- 78: Verfahrensschritt
- 80: Bestrahlungseinheit
- 82: Testfaserbündelstück
- 84: Sprüheinheit
- 86: Haltevorrichtung
- 88: Temperatursensor
- 90: Feuchtesensor

## Patentansprüche

1. Krallmatte, welche zumindest dazu vorgesehen ist, flächig über eine zu schützende Erdoberfläche einer Böschung ausgebreitet zu werden, und welche zumindest zu einem Großteil aus einer Vielzahl von miteinander kraft- und/oder stoffschlüssig verbundenen Kunststofffasern (12a) ausgebildet ist, die derart angeordnet sind, dass sie eine wesentliche dreidimensionale Strukturierung (14a) ausbilden, **dadurch gekennzeichnet, dass** zumindest ein Großteil der Kunststofffasern (12a) zumindest zu einem Großteil biodegradabel sind, wobei die Kunststofffasern (12a) Polymerfasern sind, wobei die Kunststofffasern (12a) ein monofiles dreidimensionales Wirrgelege (16a) mit Hohlräumen zwischen einem Großteil der Kunststofffasern (12a) ausbilden, wobei die Kunststofffasern (12a) einen Durchmesser von zumindest 0,1 mm aufweisen und wobei die Kunststofffasern (12a) beidseitig eine krallmattenartige Monofilament-Wirrgelege-Außenoberflächenstruktur, die zu einer Verkeilung mit Feinanteilen eines Böschungsmaterials der Böschung vorgesehen ist, ausbilden.

2. Krallmatte nach Anspruch 1, **dadurch gekennzeichnet, dass** zumindest ein Teil der Kunststofffasern (12a) zumindest zu einem Teil aus einem Polylactid-Kunststoff (PLA) ausgebildet sind.

3. Krallmatte nach Anspruch 1 oder 2, **dadurch gekennzeichnet, dass** zumindest ein Teil der Kunststofffasern (12a) zumindest zu einem Teil aus einem biodegradablen Kunststoff, welcher verschieden von einem Polylactid-Kunststoff ist, ausgebildet ist, insbesondere aus einer Polyhydroxybuttersäure (PHBV), einem Polycaprolacton (PCL), einem Polybutylensuccinat (PBS) und/oder einem Polybutylenadipat-terephthalat (PBAT).

4. Krallmatte nach einem der vorhergehenden Ansprüche, **dadurch gekennzeichnet, dass** zumindest ein Teil der Kunststofffasern (12a) zumindest zu einem Teil aus einem spinnbaren Blend zumindest zweier biodegradabler Kunststoffe ausgebildet ist.

5. Krallmatte nach Anspruch 4, **dadurch gekennzeichnet, dass** zumindest ein Bestandteil des spinnbaren Blends als ein Polylactid-Kunststoff ausgebildet ist, wobei ein Volumenanteil des Polylactid-Kunststoffs an den aus dem spinnbaren Blend ausgebildeten Kunststofffasern (12a) zumindest 40 % und vorzugsweise zumindest 50 % beträgt.

6. Krallmatte nach einem der vorhergehenden Ansprüche, **dadurch gekennzeichnet, dass** zumindest ein Großteil der Kunststofffasern (12a) thermoplastisch verformbar sind.

7. Krallmatte nach einem der vorhergehenden Ansprüche, **gekennzeichnet durch** ein Drahtgeflecht (22a), welches gemeinsam mit dem Wirrgelege aufrollbar ausgebildet ist.

8. Krallmatte nach Anspruch 7, **dadurch gekennzeichnet, dass** das Drahtgeflecht (22a) zumindest aus miteinander verflochtenen wendelförmigen Längselementen (24a) ausgebildet ist.

9. Krallmatte nach Anspruch 7 oder 8, **dadurch gekennzeichnet, dass** das Drahtgeflecht (22a) von den Kunststofffasern (12a) umflochten ist.

10. Krallmatte nach Anspruch 9, **dadurch gekennzeichnet, dass** zumindest ein Teil der Kunststofffasern (12a) stoffschlüssig mit dem Drahtgeflecht (22a) verbunden ist.

11. Krallmatte nach Anspruch 7 bis 10, **dadurch gekennzeichnet, dass** das Drahtgeflecht (22a) eine dreidimensionale, matratzenartige Struktur (48a) aufweist.

12. Krallmatte nach einem der Ansprüche 7 bis 11, **dadurch gekennzeichnet, dass** das Drahtgeflecht (22a) zumindest einen Draht (26a) umfasst, welcher zumindest teilweise aus einem hochfesten Stahl ausgebildet ist.

13. Krallmatte nach einem der vorhergehenden Ansprüche, **dadurch gekennzeichnet, dass** bei zumindest einem Testzugversuch ein gerades zumindest 1 cm langes einteiliges Testfaserstück (28a) einer Kunststofffaser (12a) der Krallmatte eine Festigkeit höher als 70 MPa, vorzugsweise höher als 80 MPa aufweist, wobei das Testfaserstück (28a) oder ein das Testfaserstück (28a) umfassendes Testfaserbündelstück (82a) bei dem Testzugversuch jeweils an seinen Enden mittels Klemmbacken (54a) in einer Zugtestvorrichtung (52a) eingespannt ist, wobei die Klemmbacken (54a) bei dem Testzugversuch mit einer Geschwindigkeit von 20 mm/min auseinanderbewegt werden, wobei die jeweiligen an den Klemmbacken (54a) bei dem Testzugversuch entstehenden Zugkräfte gemessen werden, bis das Testfaserstück (28a) oder das Testfaserbündelstück (82a) auseinanderreißt, wobei die resultierende Festigkeit die relativ auf eine Querschnittsfläche des Testfaserstücks (28a) wirkende maximale Kraft ist, welche das Testfaserstück (28a) ohne zu reißen aushält.

14. Krallmatte nach Anspruch 13, **dadurch gekennzeichnet, dass** das Testfaserstück (28a) nach einem Durchlaufen eines zumindest 500-stündigen den Vorgaben nach dem Zyklus 1 des Verfahrens A aus der Norm DIN EN ISO 4892-2:2013-06 folgenden Bestrahlungs- und Bewitterungstests in einer Bewitterungskammer (30a), bei welchem das Testfaserstück (28a) zumindest zyklisch zumindest einer Bestrahlung mit UV-Licht und zumindest einer Bewitterung durch Sprühwasser ausgesetzt ist, bei dem Testzugversuch eine Restfestigkeit von zumindest 66 % einer initialen Festigkeit des Testfaserstücks (28a) in einem unbewitterten Zustand aufweist.

15. Krallmatte nach einem der vorhergehenden Ansprüche, **dadurch gekennzeichnet, dass** bei zumindest einem Testdehnversuch zumindest ein gerades zumindest 1 cm langes einteiliges Testfaserstück (28a) einer Kunststofffaser (12a) Krallmatte eine Dehnbarkeit höher als 500 %, vorzugsweise höher als 600 % aufweist, wobei das Testfaserstück (28a) oder ein das Testfaserstück (28a) umfassendes Testfaserbündelstück (82a) bei dem Testdehnversuch jeweils an seinen Enden mittels Klemmbacken (54a) in einer Dehntestvorrichtung eingespannt ist, wobei die Klemmbacken (54a) bei dem Testdehnversuch mit einer Geschwindigkeit von 20 mm/min auseinanderbewegt werden, wobei die jeweiligen bei dem Testdehnversuch entstehenden Längenänderungen des Testfaserstücks (28a) oder des Testfaserbündelstücks (82a) gemessen werden, bis das Testfaserstück (28a) oder das Testfaserbündelstück (82a) auseinanderreißt und wobei die resultierende Dehnbarkeit eine maximale Längenänderung ist, welche das Testfaserstück (28a) ohne zu reißen aushält.

16. Krallmatte nach Anspruch 15, **dadurch gekennzeichnet, dass** das Testfaserstück (28a) nach einem Durchlaufen eines zumindest 500-stündigen den Vorgaben nach dem Zyklus 1 des Verfahrens A aus der Norm DIN EN ISO 4892-2:2013-06 folgenden Bestrahlungs- und Bewitterungstests in einer Bewitterungskammer (30a), bei welchem das Testfaserstück (28a) zumindest zyklisch zumindest einer Bestrahlung mit UV-Licht und zumindest einer Bewitterung durch Wasser ausgesetzt ist, bei dem Testdehnversuch eine Restdehnbarkeit von zumindest 50 % einer initialen Dehnbarkeit des Testfaserstücks (28a) in einem unbewitterten Zustand aufweist.

17. Krallmatte nach einem der vorhergehenden Ansprüche, **dadurch gekennzeichnet, dass** bei zumindest einem unter den in der Norm DIN EN ISO 14855:2004-10 genannten Kompostierungsbedingungen durchgeführten Kompostierversuch an zumindest einem Testfaserstück (28a) zumindest einer zumindest teilweise biodegradablen Kunststofffaser (12a) der Krallmatte zumindest 10 % des Testfaserstücks (28a) nach einem Zeitraum von 2 Jahren biologisch abgebaut ist.

18. Krallmatte nach einem der vorhergehenden Ansprüche, **dadurch gekennzeichnet, dass** bei zumindest einem unter den in der Norm DIN EN ISO 14855:2004-10 genannten Kompostierungsbedingungen Kompostierversuch an zumindest einem Testfaserstück (28a) zumindest einer zumindest teilweise biodegradablen Kunststofffaser (12a) der Krallmatte höchstens 10 % des Testfaserstücks (28a) nach einem Zeitraum von 0,5 Jahren biologisch abgebaut oder desintegriert ist.

19. Krallmatte nach einem der vorhergehenden Ansprüche, **gekennzeichnet durch** eine Lichtdurchlässigkeit.

20. Böschungssicherung (32a) mit einer Krallmatte nach einem der vorhergehenden Ansprüche.

21. Verwendung der Krallmatte nach einem der Ansprüche 1 bis 19 bei einer Neubegrünung und/oder einer Wiederbegrünung einer hanglagigen und erosionsgefährdeten Erdoberfläche.

22. Verfahren zu einer Herstellung einer Krallmatte nach einem der Ansprüche 1 bis 19, **dadurch gekennzeichnet, dass** in zumindest einem Strukturierungsschritt (36a) ausgangs voneinander getrennt ausgebildete zumindest zu einem Großteil biodegradable Kunststofffasern (12a) derart kraft- und/oder stoffschlüssig miteinander verbunden werden, dass die zumindest zu einem Großteil biodegradablen Kunststofffasern (12a) eine mattenartige Struktur mit einer wesentlich dreidimensionalen Strukturierung (14a) ausbilden.

23. Verfahren nach Anspruch 22, **dadurch gekennzeichnet, dass** die zumindest zu einem Großteil biodegradablen zufällig orientierten Kunststofffasern (12a) in zumindest einem weiteren Verfahrensschritt (40a), welcher dem Strukturierungsschritt (36a) vorangeht, schichtartig oberhalb und unterhalb eines Drahtgeflechts (22a) angeordnet werden, so dass das Drahtgeflecht (22a) während dem Strukturierungsschritt (36a) von den Kunststofffasern (12a) umflochten wird.

## Claims

1. Gripping mat,
which is at least configured to be planarly spread over an earth surface of a slope that is to be protected, and which is at least largely formed of a plurality of synthetic fibres (12a) interconnected via force-fit connection and/or substance-to-substance bond and arranged in such a way that they form an essentially three-dimensional structuring (14a),
**characterised in that** at least a large portion of the synthetic fibres (12a) are at least largely biodegradable,
wherein the synthetic fibres (12a) are polymer fibres,
wherein the synthetic fibres (12a) form a three-dimensional monofilament random-fibre fabric (16a) having hollow spaces between a large portion of the synthetic fibres (12a),
wherein the synthetic fibres (12a) have a diameter of at least 0.1 mm, and wherein the synthetic fibres (12a) have on both sides a spike-mat-like monofilament random-fibre fabric outer surface structure, which is configured for a wedging with fine matter of a slope material of the slope.

2. Gripping mat according to claim 1,
**characterised in that** at least a portion of the synthetic fibres (12a) are formed at least partially of a polylactide synthetic material (PLA).

3. Gripping mat according to claim 1 or 2,
**characterised in that** at least a portion of the synthetic fibres (12a) are made at least partially of a biodegradable synthetic material which is different from a polylactide synthetic material, in particular of a polyhydroxy butyric acid (PHBV), of a polycaprolactone (PCL), of a polybutylene succinate (PBS) and/or of a polybutylene adipate-terephthalate (PBAT).

4. Gripping mat according to one of the preceding claims,
**characterised in that** at least a portion of the synthetic fibres (12a) are made at least partially of a spinnable blend of at least two biodegradable synthetic materials.

5. Gripping mat according to claim 4,
**characterised in that** at least one component of the spinnable blend is realized as a polylactide synthetic material, wherein a volume percentage of the polylactide synthetic material of the synthetic fibres (12a) made of the spinnable blend is at least 40 % and preferably at least 50 %.

6. Gripping mat according to one of the preceding claims,
**characterised in that** at least a portion of the synthetic fibres (12a) are thermoplastically deformable.

7. Gripping mat according to one of the preceding claims,
**characterised by** a wire netting (22a) that is realized such that it can be wound up together with the random-fibre fabric.

8. Gripping mat according to claim 7,
**characterised in that** the wire netting (22a) is made of helix-shaped longitudinal elements (24a) which are braided with one another.

9. Gripping mat according to claim 7 or 8,
**characterised in that** the synthetic fibres (12a) are braided around the wire netting (22a).

10. Gripping mat according to claim 9,
**characterised in that** at least a portion of the synthetic fibres (12a) are connected with the wire netting (22a) by substance-to-substance bond.

11. Gripping mat according to claims 7 to 10,
**characterised in that** the wire netting (22a) has a three-dimensional, mattress-like structure (48a).

12. Gripping mat according to one of claims 7 to 11,
**characterised in that** the wire netting (22a) comprises at least one wire (26a) that is made at least partly of a high-tensile steel.

13. Gripping mat according to one of the preceding claims,
**characterised in that** in at least one tension test trial a straight test fibre piece (28a) of a synthetic fibre (12a) of the gripping mat, having a length of at least 1 cm and realized in one part, presents a strength that is greater than 70 MPa, preferably greater than 80 MPa,
wherein in the tension test trial the test fibre piece (28a) or a test fibre bundle piece (82a) comprising the test fibre piece (28a) is respectively
clamped with its ends in a tension test device (52a) by means of clamping jaws (54a),
wherein the clamping jaws (54a) are moved apart from each other in the tension test trial with a velocity of 20 mm/min,
wherein the respective tensile forces arising in the tension test trial at the clamping jaws (54a) are measured until the test fibre piece (28a) and/or the test fibre bundle piece (82a) breaks,
wherein the resulting strength is the maximum force which relatively acts onto a cross section area of the test fibre piece (28a) and is borne by the test fibre piece (28a) without breaking.

14. Gripping mat according to claim 13,
**characterised in that** when the test fibre piece (28a) has gone through an at least 500-hour radiation and weathering test, following the conditions of Cycle 1 of Procedure A according to the standard DIN EN ISO 4892-2:2013-06, in a weathering chamber (30a),
in which the test fibre piece (28a) has been subjected, at least cyclically, at least to a UV-light radiation and at least to a weathering by spray water, the test fibre piece (28a) presents in the tension test trial a remaining strength of at least 66 % of an initial strength of the test fibre piece (28a) in a non-weathered state.

15. Gripping mat according to one of the preceding claims,
**characterised in that** in at least one expansion test trial at least one straight test fibre piece (28a) of a synthetic fibre (12a) of the gripping mat, having a length of at least 1 cm and realized in one part, presents a stretchability above 500 %, preferably above 600 %,
wherein the test fibre piece (28a) or a test fibre bundle piece (82a) comprising the test fibre piece (28a) is in the expansion test trial respectively clamped with its ends in an expansion test device by means of clamping jaws (54a),
wherein the clamping jaws (54a) are moved apart from each other in the expansion test trial with a velocity of 20 mm/min,
wherein the respective changes in length of the test fibre piece (28a) or of the test fibre bundle piece (82a), which arise in the expansion test trial, are measured until the test fibre piece (28a) or the test fibre bundle piece (82a) breaks, and
wherein the resulting stretchability is a maximum change in length borne by the test fibre piece (28a) without breaking.

16. Gripping mat according to claim 15,
**characterised in that** when the test fibre piece (28a) has gone through an at least 500-hour radiation and weathering test, following the conditions of Cycle 1 of Procedure A according to the standard DIN EN ISO 4892-2:2013-06, in a weathering chamber (30a),
in which the test fibre piece (28a) has been subjected, at least cyclically, at least to a UV-light radiation and at least to a weathering by water, the test fibre piece (28a) presents a remaining stretchability in the expansion test trial of at least 50 % of an initial stretchability of the test fibre piece (28a) in a non-weathered state.

17. Gripping mat according to one of the preceding claims,
**characterised in that** in at least one composting test carried out on at least one test fibre piece (28a) of at least one at least partly biodegradable synthetic fibre (12a) of the gripping mat under the composting conditions given in the standard DIN EN ISO 14855:2004-10,
at least 10 % of the test fibre piece (28a) have biologically decomposed after a period of 2 years.

18. Gripping mat according to one of the preceding claims,
**characterised in that** in at least one composting test carried out on at least one test fibre piece (28a) of at least one at least partly biodegradable synthetic fibre (12a) of the gripping mat under the composting conditions given in the standard DIN EN ISO 14855:2004-10,
maximally 10 % of the test fibre piece (28a) have biologically decomposed or disintegrated after a period of 0.5 years.

19. Gripping mat according to one of the preceding claims,
**characterised by** translucence.

20. Slope securing (32a) with a gripping mat according to one of the preceding claims.

21. Usage of the gripping mat according to one of claims 1 to 19 with a seeding and/or a re-seeding of a slope-situated and/or erosion-prone earth surface.

22. Method for producing a gripping mat according to one of claims 1 to 19, **characterised in that** in at least one structuring step (36a), at least largely biodegradable synthetic fibres (12a), which are initially realized separately from one another, are connected to one another by force-fit connection and/or substance-to-substance bond such that the at least largely biodegradable synthetic fibres (12a) form a mat-like structure with an essentially three-dimensional structuring (14a).

23. Method according to claim 22,
**characterised in that** in at least one further method step (40a) that precedes the structuring step (36a), the at least largely biodegradable, randomly-oriented synthetic fibres (12a) are arranged layer-wise above and underneath a wire netting (22a) such that in the structuring step (36a) the synthetic fibres (12a) are braided around the wire netting (22a).

## Revendications

1. Mat agrippant
conçu au moins pour être qui est étalé à plat sur une surface de terre d'un escarpement à protéger et est formé au moins largement d'une pluralité de fibres synthétiques (12a) qui sont interconnectées par liaison de force et/ou par bond matériel et qui sont disposées de telle manière qu'elles forment une structuration sensiblement tridimensionnelle (14a),
**caractérisé en ce qu'**au moins une grande partie des fibres synthétiques (12a) est au moins largement biodégradable,
les fibres synthétiques (12a) étant fibres en polymère,
les fibres synthétiques (12a) formant une structure irrégulière en boucles (16a) qui est tridimensionnelle et en monofibre, avec des cavités entre une grande partie des fibres synthétiques (12a),
les fibres synthétiques (12a) ayant un diamètre d'au moins 0,1 mm et
les fibres synthétiques (12a) formant sur les deux faces une structure de surface extérieure en monofibre-irrégulière en boucles de type mat agrippant,
ladite structure étant conçue pour claveter avec des matériaux fins d'un matériau-escarpement de l'escarpement.

2. Mat agrippant selon la revendication 1,
**caractérisé en ce qu'**au moins une partie des fibres synthétiques (12a) est formée au moins partiellement d'un matériau synthétique de polylactique (PLA).

3. Mat agrippant selon la revendication 1 ou 2,
**caractérisé en ce qu**'au moins une partie des fibres synthétiques (12a) est formée au moins partiellement d'un matériau synthétique biodégradable réalisé différemment d'un matériau synthétique de polylactique,
en particulier d'une acide poly(β-hydroxy-butyrique) (PHBV), d'un polycaprolactone (PCL), d'un poly(butylène succinate) (PBS) et/ou d'un polybutylène-adipate-téréphthalate (PBAT).

4. Mat agrippant selon l'une des revendications précédentes,
caractérisé **en ce qu**'au moins une partie des fibres synthétiques (12a) est formée au moins partiellement d'un mélange apte à être filé d'au moins deux matériaux synthétiques biodégradables.

5. Mat agrippant selon la revendication 4,
**caractérisé en ce qu**'au moins un composant du mélange apte à être filé est réalisé comme matériau synthétique de polylactique,
une fraction volumique du matériau synthétique de polylactique dans les fibres synthétiques (12a) formées du mélange apte à être filé étant au moins 40 % et préférablement au moins 50 %.

6. Mat agrippant selon l'une des revendications précédentes,
**caractérisé en ce qu**'au moins une grande partie des fibres synthétiques (12a) est thermoplastiquement déformable.

7. Mat agrippant selon l'une des revendications précédentes,
**caractérisé par** un grillage en fil métallique (22a) réalisé pour être enroulable conjointement avec la structure irrégulière en boucles.

8. Mat agrippant selon la revendication 7,
**caractérisé en ce que** le grillage en fil métallique (22a) est formé au moins d'éléments longitudinaux en forme d'hélice (24a) qui sont tressés les uns avec les autres.

9. Mat agrippant selon la revendication 7 ou 8,
**caractérisé en ce que** les fibres synthétiques sont tressées autour du grillage en fil métallique (22a).

10. Mat agrippant selon la revendication 9,
**caractérisé en ce qu**'au moins une partie des fibres synthétiques (12a) est reliée avec le grillage en fil métallique (22a) par bond matériel.

11. Mat agrippant selon les revendications 7 à 10,
**caractérisé en ce que** le grillage en fil métallique (22a) présente une structure tridimensionnelle en forme de matelas.

12. Mat agrippant selon l'une des revendications 7 à 11,
**caractérisé en ce que** le grillage en fil métallique (22a) comprend au moins un fil métallique (26a) formé au moins partiellement d'un acier ultra-résistant.

13. Mat agrippant selon l'une des revendications précédentes,
**caractérisé en ce que** dans au moins un test de traction une pièce-test de fibre (28a) d'une fibre synthétique (12a) du mat agrippant, qui est droite, qui est réalisée en une partie et qui a une longueur d'au moins 1 cm, présente une résistance supérieure à 70 MPa, préférablement supérieure à 80 MPa,
où dans le test de traction la pièce-test de fibre (28a) ou une pièce-test de faisceau de fibres (82a) comprenant la pièce-test de fibre (28a) est respectivement enserrée avec ses extrémités dans un appareil de test de traction (52a) moyennant des mâchoires de serrage (54a),
où les mâchoires de serrage (54a) sont mues l'un à l'écart de l'autre dans le test de traction avec une vélocité de 20 mm/min,
où les forces de traction respectives générées dans le test de traction aux mâchoires de serrage (54a) sont mesurées jusqu'à ce que la pièce-test de fibre (28a) ou la pièce-test de faisceau de fibres (82a) se rompe,
la résistance résultante étant la force maximale agissant relativement sur une surface transversale de la pièce-test de fibre (28a) qui est tolérée par la pièce-test de fibre (28a) sans rupture.

14. Mat agrippant selon la revendication 13,
**caractérisé en ce que,** ayant passé un test d'au moins 500 heures d'irradiation et de soumission aux intempéries dans une chambre d'intempéries (30a), ledit test observant les exigences selon le Cycle 1 de la Procédure A de la norme DIN EN ISO 4892-2 :2013-06,
dans lequel la pièce-test de fibre (28a) est exposée au moins de façon cyclique au moins à une irradiation de lumière UV et au moins à une soumission aux intempéries par eau pulvérisée,
la pièce-test de fibre (28a) présente dans le test de traction une résistance résiduelle d'au moins 66 % d'une résistance initiale de la pièce-test de fibre (28a) en état de n'avoir être pas soumise aux intempéries.

15. Mat agrippant selon l'une des revendications précédentes,
**caractérisé en ce que** dans au moins un test d'étirement
une pièce-test de fibre (28a) d'une fibre synthétique (12a) du mat agrippant, qui est droite, qui est réalisée en une partie et qui a une longueur d'au
moins 1 cm, présente une extensibilité supérieure à 500 %, préférablement supérieure à 600 %,
où dans le test d'étirement la pièce-test de fibre (28a) ou une pièce-test de faisceau de fibres (82a) comprenant la pièce-test de fibre (28a) est respectivement enserrée avec ses extrémités dans un appareil de test d'étirement (52a) moyennant des mâchoires de serrage (54a),
où les mâchoires de serrage (54a) sont mues l'une à l'écart de l'autre dans le test d'étirement avec une vélocité de 20 mm/min,
où les changements de longueur respectives de la pièce-test de fibre (28a) ou de la pièce-test de faisceau de fibres (82a) produites dans le test d'étirement sont mesurées jusqu'à ce que la pièce-test de fibre (28a) ou la pièce-test de faisceau de fibres (82a) se rompe, et
où l'extensibilité résultante est un changement de longueur maximal toléré par la pièce-test de fibre (28a) sans rupture.

16. Mat agrippant selon la revendication 15,
**caractérisé en ce que,** ayant passé un test d'irradiation et de soumission aux intempéries d'au moins 500 heures dans une chambre d'intempéries (30a), ledit test observant les exigences selon le Cycle 1 de la Procédure A de la norme DIN EN ISO 4892-2 :2013-06,
dans lequel la pièce-test de fibre (28a) est exposée au moins de façon cyclique au moins à une irradiation de lumière UV et au moins à une soumission aux intempéries par eau,
la pièce-test de fibre (28a) présente dans le test d'étirement une extensibilité résiduelle d'au moins 50 % d'une extensibilité initiale de la pièce-test de fibre (28a) en état de n'avoir être pas soumise aux intempéries.

17. Mat agrippant selon l'une des revendications précédentes,
**caractérisé en ce que** dans au moins un test de compostage réalisé sous les conditions de compostage données dans la norme DIN EN ISO 14855 :2004-10, avec au moins une pièce-test de fibre (28a) de l'au moins une fibre synthétique (12a) du mat au crampons, qui est au moins partiellement biodégradable,
au moins 10 % de la pièce-test de fibre (28a) ont été décomposés par biodégradation après une période de 2 ans.

18. Mat agrippant selon l'une des revendications précédentes,
**caractérisé en ce que** dans au moins un test de compostage réalisé sous les conditions de compostage données dans la norme DIN EN ISO 14855 :2004-10, avec au moins une pièce-test de fibre (28a) de l'au moins une fibre synthétique (12a) du mat au crampons, qui est au moins partiellement biodégradable,
maximalement 10 % de la pièce-test de fibre (28a) ont été décomposés par biodégradation ou par désintégration après une période de 0,5 ans.

19. Mat agrippant selon l'une des revendications précédentes,
**caractérisé par** translucidité.

20. Sauvegarde d'escarpement (32a) avec un mat agrippant selon l'une des revendications précédentes.

21. Utilisation du mat agrippant selon l'une des revendications 1 à 19 dans une végétalisation nouvelle et/ou une re-végétalisation d'une surface de terre située en pente et menacée d'érosion.

22. Procédé pour la fabrication d'un mat agrippant selon l'une des revendications 1 à 19,
**caractérisé en ce que** dans au moins une étape de structuration (36a) des fibres synthétiques (12a) initialement réalisées séparément l'une de l'autre, qui sont au moins largement biodégradables, sont interconnectées par liaison de force et/ou par bond matériel
de telle manière que les fibres synthétiques (12a) qui sont au moins largement biodégradables forment une structure en forme de mat ayant une structuration sensiblement tridimensionnelle (14a).

23. Procédé selon la revendication 22,
**caractérisé en ce que** dans au moins une autre étape de procédé (40a) qui précède l'étape de structuration (36a),
les fibres synthétiques (12a), qui sont au moins largement biodégradables et sont orientées de manière aléatoire, sont disposées en couches au-dessus et au-dessous d'un grillage en fil métallique (22a) de telle manière que les fibres synthétiques (12a) sont tressées autour du grillage en fil métallique (22a) pendant l'étape de structuration (36a).
